# EUROPEAN PATENT APPLICATION

(11) **EP 4 454 901 A1**
(43) Date of publication of application: **30.10.2024**
(21) Application number: 22911233.9
(22) Date of filing: 20.12.2022
(51) Int. Cl.: B41M 5/40, B41M 5/42, B41M 5/44, B42D 25/23, B42D 25/24, B32B 7/023

(54) **RECORDING MEDIUM, CARD, AND BOOKLET**

(30) Priority: 22.12.2021 JP 2021208805
(71) Applicant: Sony Group Corporation, Tokyo 108-0075 (JP)
(72) Inventor: MIZUNO, Hiroshi, Tokyo 108-0075 (JP); TAKAGI, Kenji, Tokyo 108-0075 (JP); WATANABE, Maho, Tokyo 108-0075 (JP)
(74) Representative: D Young & Co LLP
(86) International application number: PCT/JP2022/046928
(87) International publication number: WO 2023/120531

(57) **Abstract**

Provided is a recording medium in which a base material and a color development layer are prevented from peeling from each other and color development layers are prevented from peeling from each other.

The recording medium includes a base material and a laminate provided on the base material. The laminate includes a plurality of color development layers, and the average peel strength between the base material and the laminate and the average peel strength between the color development layers included in the laminate are 5 N/cm or more.

## Description

### TECHNICAL FIELD

The present disclosure relates to a recording medium, and a card and a booklet including the recording medium.

### BACKGROUND ART

A recording medium including a plurality of color development layers that allows for drawing with laser light has been proposed. In recent years, embedding such a recording medium in a card such as a financial settlement card or an ID card, or a booklet such as a passport has been under consideration. In the card or the booklet as described above, it is desirable to prevent the recording medium from being taken out, from the viewpoint of preventing tampering.

Patent Document 1 proposes a thermosensitive recording medium including at least a pressure-sensitive adhesive layer, a support, and a thermosensitive recording layer, the thermosensitive recording medium being configured to break when the thermosensitive recording medium having its surface bonded to a flat surface containing dimethyl silicone is tried to be peeled off.

### CITATION LIST

### PATENT DOCUMENT

Patent Document 1: Japanese Patent Application Laid-Open No. 2020-152022

### SUMMARY OF THE INVENTION

### PROBLEMS TO BE SOLVED BY THE INVENTION

However, in the conventional recording medium, since bonding between a base material and a color development layer, and bonding between color development layers are each by a pressure-sensitive adhesive layer, the strengths between the base material and the color development layer and between the color development layers are insufficient, and there is a possibility that the base material and the color development layer are peeled off from each other or the color development layers are peeled off from each other by a blade or the like.

An object of the present disclosure is to provide a recording medium in which peeling of a base material and a color development layer from each other, and peeling of color development layers from each other can be prevented, and a card and a booklet including the recording medium.

### SOLUTIONS TO PROBLEMS

In order to solve the above problem, a recording medium according to a first disclosure includes:
a base material and a laminate provided on the base material, in which
the laminate includes a plurality of color development layers, and
an average peel strength between the base material and the laminate and an average peel strength between the color development layers included in the laminate are 5 N/cm or more.

A recording medium according to a second disclosure includes:
a first base material; and
a laminate provided on the first base material; in which
the laminate includes a plurality of color development layers, and
an average value of minimum peel strengths among peel strengths between the respective layers constituting the recording medium is 5 N/cm or more.

A second disclosure is a card including the recording medium according to the first disclosure or the second disclosure.

A third disclosure is a booklet including the recording medium according to the first disclosure or the second disclosure.

In the present disclosure, the laminate may further include a plurality of adhesive layers. In this case, the color development layers and the adhesive layers may be alternately laminated. The number of adhesive layers of the recording medium is preferably four or less in order to reduce an adhesive interface serving as a peeling starting point. However, the number of adhesive layers of the recording medium is not limited to four or less, and may be five or more.

In the present disclosure, in a case where the adhesive layer is provided between two color development layers, the average peel strength between the color development layers included in the laminate means the average peel strength between the color development layers which adhere to each other via the adhesive layer.

In the present disclosure, the plurality of color development layers may be capable of exhibiting hues different from each other in a color-developed state. In this case, a first color development layer may exhibit a first primary color among the three primary colors, a second color development layer may exhibit a second primary color among the three primary colors, and a third color development layer may exhibit a third primary color among the three primary colors. The three primary colors may be magenta, cyan, and yellow.

In the present disclosure, the card may further include a card base material having a first surface and a second surface, and the recording medium of the present disclosure may be provided on the first surface and/or the second surface of the card base material. Here, the term "and/or" means "at least one", and for example, in a case where the term is used in a phrase "X and/or Y", this phrase means three cases of "only X", "only Y", and "X and Y".

### BRIEF DESCRIPTION OF DRAWINGS

Fig. 1 is a cross-sectional view illustrating an example of a configuration of a recording medium according to a first embodiment.
Fig. 2 is a diagram of a testing apparatus for a 90 degree peel test.
Fig. 3A is a view for explaining a preparation step for the 90 degree peel test. Fig. 3B is a diagram of a testing apparatus for a 90 degree peel test.
Fig. 4 is a cross-sectional view illustrating an example of a configuration of a recording medium according to a second embodiment.
Fig. 5A is a plan view illustrating an example of a configuration of a card according to a third embodiment. Fig. 5B is a cross-sectional view taken along line VB-VB of Fig. 5.
Fig. 6 is a cross-sectional view illustrating an example of a configuration of a card according to a fourth embodiment.
Fig. 7 is a cross-sectional view illustrating an example of a configuration of a recording medium according to a modification.
Fig. 8 is a cross-sectional view illustrating an example of a configuration of a recording medium according to a modification.
Fig. 9 is a cross-sectional view illustrating an example of a configuration of a recording medium according to a modification.
Fig. 10 is a cross-sectional view illustrating an example of a configuration of a recording medium according to a modification.
Fig. 11A is a cross-sectional view illustrating an example of a configuration of a card according to a modification. Fig. 11B is a cross-sectional view illustrating an example of a configuration of a card according to a modification. Fig. 11C is a cross-sectional view illustrating an example of a configuration of a card according to a modification.
Fig. 12 is a perspective view illustrating an example of a configuration of a booklet according to a modification.
Fig. 13A is a graph obtained by a 90 degree peel test of a recording medium of Example 1. Fig. 13B is a graph obtained by a 90 degree peel test of a recording medium of Example 2.
Fig. 14A is a graph obtained by a 90 degree peel test of a recording medium of Example 3. Fig. 14B is a graph obtained by a 90 degree peel test of a recording medium of Comparative Example 1.

### MODE FOR CARRYING OUT THE INVENTION

Embodiments of the present disclosure will be described in the following order with reference to the drawings. Note that the same or corresponding portions will be denoted by the same reference signs in all the drawings of the following embodiments.
1 First embodiment (example of recording medium)
   1.1 Configuration of recording medium
   1.2 Method of manufacturing recording medium
   1.3 Recording method of recording medium
   1.4 Operation and effect
2 Second embodiment (example of recording medium) 2.1 Configuration of recording medium
   2.2 Method of manufacturing recording medium
   2.3 Operation and effect
3 Third embodiment (example of card)
   3.1 Configuration of card
   3.2 Method of manufacturing card
   3.3 Operation and effect
4 Fourth embodiment (example of card)
   4.1 Configuration of card
   4.2 Method of manufacturing card
   4.3 Operation and effect
5 Modifications

### <1 First embodiment>

### [1.1 Configuration of recording medium]

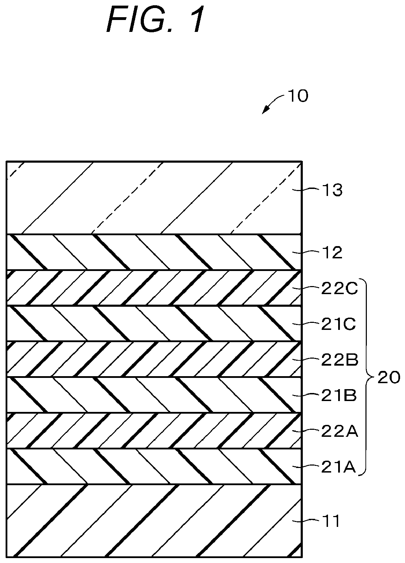

Hereinafter, an example of a configuration of a recording medium 10 according to a first embodiment will be described with reference to Fig. 1. The recording medium 10 is configured to be changeable in its colored state in response to irradiation with laser light (external stimulus). This change in the colored state allows for drawing of an image or the like on the recording medium 10, for example. Here, the image is not limited to an image such as a pattern, a color pattern, or a photograph, and includes text and the like such as characters and symbols.

The laser light is preferably near-infrared laser light. In the present specification, the near-infrared laser light refers to laser light having a peak wavelength in a wavelength range of more than 780 nm and 2.5 um or less. The change in the colored state may be a reversible change or an irreversible change. That is, the recording medium 10 may be of a rewritable type which allows for rewriting of an image or the like, or may be of a write once type which allows for writing of an image or the like only once. From the viewpoint of preventing tampering, the change in the colored state is preferably an irreversible change.

The recording medium 10 includes a base material 11 (first base material), a laminate 20 provided on the base material 11, an adhesive layer (fifth adhesive layer) 12 provided on the laminate 20, and a cover layer 13 provided on the adhesive layer 12. The laminate 20 includes three adhesive layers (first, second and third adhesive layers) 21A, 21B, and 21C and three color development layers (first, second, and third color development layers) 22A, 22B, and 22C. In the present specification, in a case where the adhesive layers 21A, 21B, and 21C are collectively referred to without being distinguished, they may be referred to as an adhesive layer 21. Similarly, in a case where the color development layers 22A, 22B, and 22C are collectively referred to without being distinguished, they may be referred to as a color development layer 22. The adhesive layer 21A, the adhesive layer 21B, the adhesive layer 21C, and the adhesive layer 12 are examples of the first adhesive layer, the second adhesive layer, the third adhesive layer, and the fifth adhesive layer, respectively. The color development layer 22A, the color development layer 22B, and the color development layer 22C are examples of the first color development layer, the second color development layer, and the third color development layer, respectively.

The color development layers 22 and the adhesive layers 21 are alternately laminated on the base material 11. More specifically, the three adhesive layers 21A, 21B, and 21C and the three color development layers 22A, 22B, and 22C are laminated on the base material 11 in the order of the adhesive layer 21A, the color development layer 22A, the adhesive layer 21B, the color development layer 22B, the adhesive layer 21C, and the color development layer 22C.

### (Base material 11)

The base material 11 is a support for supporting the laminate 20. The base material 11 preferably contains a material having excellent heat resistance and excellent dimensional stability in the planar direction. The base material 11 may be either transmissive or non-transmissive characteristics with respect to visible light. In the present specification, visible light refers to light in a wavelength range of 360 nm or more and 780 nm or less. The base material 11 may have a predetermined color such as white. The base material 11 has a first surface on which the laminate 20 is provided and a second surface opposite to the first surface. The base material 11 has, for example, a plate shape or a film shape. Note that the film is defined to include a sheet in the present disclosure.

The base material 11 may have, for example, rigidity or flexibility. In a case where a flexible material is used as the base material 11, a flexible recording medium 10 can be achieved. Examples of the base material 11 having rigidity include a wafer, a glass substrate, and the like. Examples of the base material 11 having flexibility include flexible glass, a film, paper, and the like.

The base material 11 contains, for example, at least one selected from the group consisting of an inorganic material, a metal material, a polymer material, and the like. The inorganic material includes, for example, at least one selected from the group consisting of silicon (Si), silicon oxide (SiOₓ), silicon nitride (SiNₓ), aluminum oxide (AlOₓ), and the like. The silicon oxide includes, for example, at least one selected from the group consisting of glass, spin-on-glass (SOG), and the like. The metal material includes, for example, at least one selected from the group consisting of aluminum (Al), nickel (Ni), stainless steel, and the like. The polymer material includes, for example, at least one selected from the group consisting of polycarbonate (PC), polyethylene terephthalate (PET), polyethylene naphthalate (PEN), polyethyl ether ketone (PEEK), polyvinyl chloride (PVC), and the like.

Note that a reflection layer (not illustrated) may be provided on at least one of the first surface or the second surface of the base material 11, or the base material 11 itself may also function as a reflection layer. The base material 11 having such a configuration enables clearer color display.

### (Color development layers 22A, 22B, and 22C)

The color development layers 22A, 22B, and 22C in a non-recorded state (initial state) are in a non-colored state. The color development layers 22A, 22B, and 22C can be changed from the non-colored state to a color-developed state by irradiation with laser light. The non-colored state may be a state in which the laser light and visible light can be transmitted.

The respective color development layers 22A, 22B, and 22C can exhibit hues different from each other in the color-developed state. Specifically, the color development layer 22A can exhibit a magenta color in the color-developed state. The color development layer 22B can exhibit a cyan color in the color-developed state. The color development layer 22C can exhibit a yellow color in the color-developed state. Magenta, cyan, and yellow are examples of the first primary color, the second primary color, and the third primary color, respectively. The first primary color, the second primary color, and the third primary color may be colors other than magenta, cyan, and yellow. The laser light capable of changing the color development layer 22A to the color-developed state, the laser light capable of changing the color development layer 22B to the color-developed state, and the laser light capable of changing the color development layer 22C to the color-developed state have peak wavelengths different from each other.

The thicknesses of the color development layers 22A, 22B, and 22C are each preferably 1 um or more and 20 um or less, and more preferably 2 um or more and 15 um or less. With the color development layers 22A, 22B, and 22C having a thickness of 1 um or more, the color development density can be improved. On the other hand, with the color development layers 22A, 22B, and 22C having a thickness of 20 um or less, an increase in the heat utilization amount of the color development layers 22A, 22B, and 22C can be prevented, and deterioration in color developability can be prevented.

The color development layer 22A contains a first coloring compound having an electron-donating property, a first developer having an electron-accepting property, and a first photothermal conversion agent. The color development layer 22A preferably further contains a first matrix resin.

The color development layer 22B contains a second coloring compound having an electron-donating property, a second developer having an electron-accepting property, and a second photothermal conversion agent. The color development layer 22B preferably further contains a second matrix resin.

The color development layer 22C contains a third coloring compound having an electron-donating property, a third developer having an electron-accepting property, and a third photothermal conversion agent. The color development layer 22C preferably further contains a third matrix resin.

### (First, second and third coloring compounds)

The first, second, and third coloring compounds may be the same or different in type, and can develop color by reacting with the first, second, and third developers, respectively. The first, second and third coloring compounds can exhibit hues different from each other in the color-developed state. Specifically, the first coloring compound can exhibit a magenta color in the color-developed state. The second coloring compound can exhibit a cyan color in the color-developed state. The third coloring compound can exhibit a yellow color in the color-developed state.

The first, second, and third coloring compounds are, for example, leuco dyes. The leuco dye develops color when a lactone ring in a molecule reacts with an acid to be ring-opened. The leuco dye may be decolored when the open lactone ring reacts with a base to be ring-closed. The leuco dye may be, for example, an existing dye for thermosensitive paper.

The first, second, and third coloring compounds can be appropriately selected according to the purpose, without any limitation. The first, second, and third coloring compounds contain, for example, at least one selected from the group consisting of fluoran compounds, triphenylmethane phthalide compounds, azaphthalide compounds, phenothiazine compounds, leucoauramine compounds, indolinophthalide compounds, and the like. Besides, the first, second and third coloring compounds may contain, for example, at least one selected from the group consisting of 2-anilino-3-methyl-6-diethylaminofluoran, 2-anilino-3-methyl-6-di(n-butylamino)fluoran, 2-anilino-3-methyl-6-(N-n-propyl-N-methylamino)fluoran, 2-anilino-3-methyl-6-(N-isopropyl-N-methylamino)fluoran, 2-anilino-3-methyl-6-(N-isobutyl-N-methylamino)fluoran, 2-anilino-3-methyl-6-(N-n-amyl-N-methylamino)fluoran, 2-anilino-3-methyl-6-(N-sec-butyl-N-methylamino)fluoran, 2-anilino-3-methyl-6-(N-n-amyl-N-ethylamino)fluoran, 2-anilino-3-methyl-6-(N-iso-amyl-N-ethylamino)fluoran, 2-anilino-3-methyl-6-(N-n-propyl-N-isopropylamino)fluoran, 2-anilino-3-methyl-6-(N-cyclohexyl-N-methylamino)fluoran, 2-anilino-3-methyl-6-(N-ethyl-p-toluidino)fluoran, 2-anilino-3-methyl-6-(N-methyl-p-toluidino)fluoran, 2-(m-trichloromethylanilino)-3-methyl-6-diethylaminofluoran, 2-(m-trifluoromethylanilino)-3-methyl-6-diethylaminofluoran, 2-(m-trichloromethylanilino)-3-methyl-6-(N-cyclohexyl-N-methylamino)fluoran, 2-(2,4-dimethylanilino)-3-methyl-6-diethylaminofluoran, 2-(N-ethyl-p-toluidino)-3-methyl-6-(N-ethylanilino)fluoran, 2-(N-ethyl-p-toluidino)-3-methyl-6-(N-propyl-p-toluidino)fluoran, 2-anilino-6-(N-n-hexyl-N-ethylamino)fluoran, 2-(o-chloroanilino)-6-diethylaminofluoran, 2-(o-chloroanilino)-6-dibutylaminofluoran, 2-(m-trifluoromethylanilino)-6-diethylaminofluoran, 2,3-dimethyl-6-dimethylaminofluoran, 3-methyl-6-(N-ethyl-p-toluidino)fluoran, 2-chloro-6-diethylaminofluoran, 2-bromo-6-diethylaminofluoran, 2-chloro-6-dipropylaminofluoran, 3-chloro-6-cyclohexylaminofluoran, 3-bromo-6-cyclohexylaminofluoran, 2-chloro-6-(N-ethyl-N-isoamylamino)fluoran, 2-chloro-3-methyl-6-diethylaminofluoran, 2-anilino-3-chloro-6-diethylaminofluoran, 2-(o-chloroanilino)-3-chloro-6-cyclohexylaminofluoran, 2-(m-trifluoromethylanilino)-3-chloro-6-diethylaminofluoran, 2-(2,3-dichloroanilino)-3-chloro-6-diethylaminofluoran, 1,2-benzo-6-diethylaminofluoran, 3-diethylamino-6-(m-trifluoromethylanilino)fluoran, 3-(1-ethyl-2-methylindol-3-yl)-3-(2-ethoxy-4-diethylaminophenyl)-4-azaphthalide, 3-(1-ethyl-2-methylindol-3-yl)-3-(2-ethoxy-4-diethylaminophenyl)-7-azaphthalide, 3-(1-octyl-2-methylindol-3-yl)-3-(2-ethoxy-4-diethylaminophenyl)-4-azaphthalide, 3-(1-ethyl-2-methylindol-3-yl)-3-(2-methyl-4-diethylaminophenyl)-4-azaphthalide, 3-(1-ethyl-2-methylindol-3-yl)-3-(2-methyl-4-diethylaminophenyl)-7-azaphthalide, 3-(1-ethyl-2-methylindol-3-yl)-3-(4-diethylaminophenyl)-4-azaphthalide, 3-(1-ethyl-2-methylindol-3-yl)-3-(4-N-n-amyl-N-methylaminophenyl)-4-azaphthalide, 3-(1-methyl-2-methylindol-3-yl)-3-(2-hexyloxy-4-diethylaminophenyl)-4-azaphthalide, 3,3-bis(2-ethoxy-4-diethylaminophenyl)-4-azaphthalide, 3,3-bis(2-ethoxy-4-diethylaminophenyl)-7-azaphthalide, 2-(p-acetylanilino)-6-(N-n-amyl-N-n-butylamino)fluoran, 2-benzylamino-6-(N-ethyl-p-toluidino)fluoran, 2-benzylamino-6-(N-methyl-2,4-dimethylanilino)fluoran, 2-benzylamino-6-(N-ethyl-2,4-dimethylanilino)fluoran, 2-benzylamino-6-(N-methyl-p-toluidino)fluoran, 2-benzylamino-6-(N-ethyl-p-toluidino)fluoran, 2-(di-p-methylbenzylamino)-6-(N-ethyl-p-toluidino)fluoran, 2-(α-phenylethylamino)-6-(N-ethyl-p-toluidino)fluoran, 2-methylamino-6-(N-methylanilino)fluoran, 2-methylamino-6-(N-ethylanilino)fluoran, 2-methylamino-6-(N-propylanilino)fluoran, 2-ethylamino-6-(N-methyl-p-toluidino)fluoran, 2-methylamino-6-(N-methyl-2,4-dimethylanilino)fluoran, 2-ethylamino-6-(N-ethyl-2,4-dimethylanilino)fluoran, 2-dimethylamino-6-(N-methylanilino)fluoran, 2-dimethylamino-6-(N-ethylanilino)fluoran, 2-diethylamino-6-(N-methyl-p-toluidino)fluoran, 2-diethylamino-6-(N-ethyl-p-toluidino)fluoran, 2-dipropylamino-6-(N-methylanilino)fluoran, 2-dipropylamino-6-(N-ethylanilino)fluoran, 2-amino-6-(N-methylanilino)fluoran, 2-amino-6-(N-ethylanilino)fluoran, 2-amino-6-(N-propylanilino)fluoran, 2-amino-6-(N-methyl-p-toluidino)fluoran, 2-amino-6-(N-ethyl-p-toluidino)fluoran, 2-amino-6-(N-propyl-p-toluidino)fluoran, 2-amino-6-(N-methyl-p-ethylanilino)fluoran, 2-amino-6-(N-ethyl-p-ethylanilino)fluoran, 2-amino-6-(N-propyl-p-ethylanilino)fluoran, 2-amino-6-(N-methyl-2,4-dimethylanilino)fluoran, 2-amino-6-(N-ethyl-2,4-dimethylanilino)fluoran, 2-amino-6-(N-propyl-2,4-dimethylanilino)fluoran, 2-amino-6-(N-methyl-p-chloroanilino)fluoran, 2-amino-6-(N-ethyl-p-chloroanilino)fluoran, 2-amino-6-(N-propyl-p-chloroanilino)fluoran, 1,2-benzo-6-(N-ethyl-N-isoamylamino)fluoran, 1,2-benzo-6-dibutylaminofluoran, 1,2-benzo-6-(N-methyl-N-cyclohexylamino)fluoran, 1,2-benzo-6-(N-ethyl-N-toluidino)fluoran, and the like.

### (First, second and third developers)

The first, second, and third developers can cause the first, second, and third coloring compounds in the non-colored state to develop color, respectively. The types of the first, second, and third developers may be the same or different from each other. The first, second, and third developers are compounds including an electron-accepting group in the molecule. The electron-accepting moieties of the first, second and third developers react with the lactone rings of the first, second and third coloring compounds, respectively, and the lactone rings are ring-opened, whereby the first, second and third coloring compounds develop color. The first, second, and third developers contain, for example, at least one selected from the group consisting of a phenol derivative, a salicylic acid derivative, a urea derivative, and the like.

Specifically, for example, the developer contains a compound represented by the following formula (1): 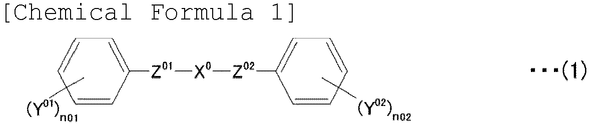 (where X° is a divalent group including at least one benzene ring; Y⁰¹ and Y⁰² are each independently a monovalent group; n01 and n02 are each independently an integer of any one of 0 to 5; Y⁰¹ may be the same as or different from each other in a case where n01 is an integer of any one of 2 to 5; Y⁰² may be the same as or different from each other in a case where n02 is an integer of any one of 2 to 5; and Z⁰¹ and Z⁰² are each independently a hydrogen bonding group).

With X° including at least one benzene ring, the melting point can be increased as compared with the case where X° is an aliphatic hydrocarbon group (for example, a normal alkyl chain), so that the color development retention characteristics at the time of high temperature and high humidity storage (hereinafter referred to as "high temperature and high humidity storage characteristics") can be improved. From the viewpoint of improving the high temperature and high humidity storage characteristics and heat resistance, X° preferably includes at least two benzene rings. The high temperature and high humidity storage characteristics are, for example, storage characteristics under an environment of 80°C and 60%RH. The increase in the heat resistance leads to an improvement in the resistance of the recording medium 10 to a severe process (for example, heat-pressing, integral molding using a molten resin or the like, or the like). In a case where X° includes at least two benzene rings, the at least two benzene rings may be fused. For example, naphthalene or anthracene may be used.

With Z⁰¹ and Z⁰² being each independently a hydrogen bonding group, the developers are likely to exist while being gathered to some extent via hydrogen bonds, so that the stability of the developers in the color development layers 22A, 22B, and 22C is improved. In the present specification, the hydrogen bonding group means a functional group including an atom capable of hydrogen bonding with an atom present in another functional group, another compound, or the like.

The developer preferably contains a compound represented by the following formula (2): 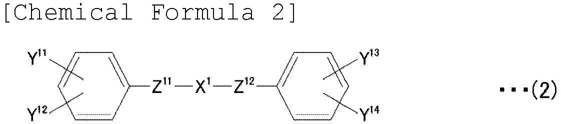 (where X¹ is a divalent group including at least one benzene ring; Y¹¹, Y¹², Y¹³, and Y¹⁴ are each independently a monovalent group; and Z¹¹ and Z¹² are each independently a hydrogen bonding group).

With X¹ including at least one benzene ring, the melting point can be increased as compared with the case where X¹ is an aliphatic hydrocarbon group (for example, a normal alkyl chain), so that the high temperature and high humidity storage characteristics can be improved. From the viewpoint of improving the high temperature and high humidity storage characteristics and heat resistance, X¹ preferably includes at least two benzene rings. In a case where X¹ includes at least two benzene rings, the at least two benzene rings may be fused. For example, naphthalene or anthracene may be used.

With Z¹¹ and Z¹² being each independently a hydrogen bonding group, the developers are likely to exist while being gathered to some extent via hydrogen bonds, so that the stability of the developers in the color development layers 22A, 22B, and 22C is improved.

In a case where the formula (1) and the formula (2) include a hydrocarbon group, the hydrocarbon group is a generic term for groups including carbon (C) and hydrogen (H), and may be a saturated hydrocarbon group or an unsaturated hydrocarbon group. The saturated hydrocarbon group is an aliphatic hydrocarbon group having no carbon-carbon multiple bond, and the unsaturated hydrocarbon group is an aliphatic hydrocarbon group having a carbon-carbon multiple bond (carbon-carbon double bond or carbon-carbon triple bond).

In a case where the formula (1) and the formula (2) include a hydrocarbon group, the hydrocarbon group may be a chain or may include one or two or more rings. The chain may be a linear chain, or may be a branched chain having one or two or more side chains or the like.

(X°, X¹ with one benzene ring)
X° in the formula (1) and X¹ in the formula (2) are, for example, a divalent group including one benzene ring. The divalent group is represented by, for example, the following formula (3): 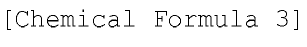 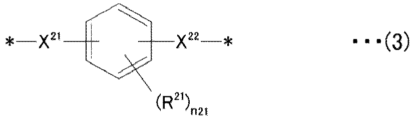 (where X²¹ may be present or absent, and in a case where X²¹ is present, X²¹ is a divalent group; X²² may be present or absent, and in a case where X²² is present, X²² is a divalent group; R²¹ is a monovalent group; n21 is an integer of any one of 0 to 4; in a case where n21 is an integer of any one of 2 to 4, R²¹ may be the same as or different from each other; and * denotes a bonding portion).

In the formula (3), the bonding positions of X²¹ and X²² on the benzene ring are not limited. That is, the bonding positions of X²¹ and X²² on the benzene ring may be any of ortho positions, meta positions, and para positions.

From the viewpoint of improving high temperature and high humidity storage characteristics, the above-described divalent group including one benzene ring is preferably represented by the following formula (4): 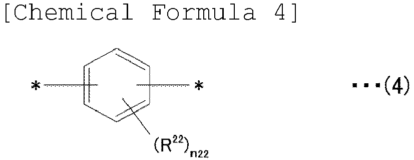 (where R²² is a monovalent group; n22 is an integer of any one of 0 to 4; in a case where n22 is an integer of any one of 2 to 4, R²² may be the same as or different from each other; and * denotes a bonding portion).

In a case where X° in the formula (1) is a divalent group including one benzene ring, the bonding positions of Z⁰¹ and Z⁰² on the benzene ring in the formula (4) are not limited. That is, the bonding positions of Z⁰¹ and Z⁰² on the benzene ring may be any of ortho positions, meta positions, and para positions.

In a case where X¹ in the formula (2) is a divalent group including one benzene ring, the bonding positions of Z¹¹ and Z¹² on the benzene ring in the formula (4) are not limited. That is, the bonding positions of Z¹¹ and Z¹² on the benzene ring may be any of ortho positions, meta positions, and para positions.

### (X²¹, X²²)

X²¹ and X²² in the formula (3) are only required to be each independently a divalent group without limitation, and examples thereof include a hydrocarbon group optionally having a substituent. The hydrocarbon group is preferably in a chain form. With the hydrocarbon group in a chain form, the melting point of the developer can be reduced, allowing the developer to be dissolved by irradiation with laser light, and therefore the coloring compound readily develops a color. From the viewpoint of reducing the melting point of the developer, a normal alkyl chain is particularly preferable among the chain hydrocarbon groups.

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

In a case where X²¹ and X²² in the formula (3) are normal alkyl groups, the number of carbon atoms of the normal alkyl group is preferably 8 or less, more preferably 6 or less, still more preferably 5 or less, and particularly preferably 3 or less from the viewpoint of high temperature storage stability. It is considered that in a case where the number of carbon atoms of the normal alkyl group is 8 or less, due to the short length of the normal alkyl group, thermal disturbance is less likely to occur in the developer during storage at a high temperature, and a site that interacts with the coloring compound such as the leuco dye at the time of color development is less likely to be separated. Therefore, the coloring compound such as the leuco dye is less likely to be decolored during high temperature storage, and thus high temperature storage stability is improved.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by substituting a part of carbon atoms of the hydrocarbon group (for example, a part of carbon atoms included in a main chain of the hydrocarbon group) with an element such as oxygen.

### (R21)

R²¹ in the formula (3) is only required to be a monovalent group without limitation, and examples thereof include a halogen group or a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by substituting a part of carbon atoms of the hydrocarbon group (for example, a part of carbon atoms included in a main chain of the hydrocarbon group) with an element such as oxygen.

### (R²²)

R²² in the formula (4) is only required to be a monovalent group without limitation, and examples thereof include a halogen group or a hydrocarbon group optionally having a substituent. Each of the halogen group and the hydrocarbon group optionally having a substituent is similar to that for R²¹ in the above formula (3).

### (X°, X¹ including two benzene rings)

X° in the formula (1) and X¹ in the formula (2) are, for example, divalent groups including two benzene rings. The divalent group is represented by, for example, the following formula (5): 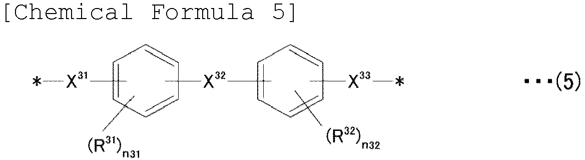 (where X³¹ may be present or absent, and in a case where X³¹ is present, X³¹ is a divalent group; X³² may be present or absent, and in a case where X³² is present, X³² is a divalent group; X³³ may be present or absent, and in a case where X³³ is present, X³³ is a divalent group; R³¹ and R³² are each independently a monovalent group; n31 and n32 are each independently an integer of any one of 0 to 4; in a case where n31 is an integer of any one of 2 to 4, R³¹ may be the same as or different from each other; in a case where n32 is an integer of any one of 2 to 4, R³² may be the same as or different from each other; and * denotes a bonding portion).

In the formula (5), the bonding positions of X³¹ and X³² on the benzene ring are not limited. That is, the bonding positions of X³¹ and X³² on the benzene ring may be any of ortho positions, meta positions, and para positions. Similarly, in the formula (5), the bonding positions of X³² and X³³ on the benzene ring are not limited. That is, the bonding positions of X³² and X³³ on the benzene ring may be any of ortho positions, meta positions, and para positions.

From the viewpoint of improving high temperature and high humidity storage characteristics, the above-described divalent group including two benzene rings is preferably represented by the following formula (6): 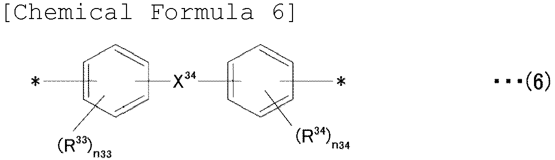 (where X³⁴ is a divalent group; R³³ and R³⁴ are each independently a monovalent group; n33 and n34 are each independently an integer of any one of 0 to 4; in a case where n33 is an integer of any one of 2 to 4, R³³ may be the same as or different from each other; in a case where n34 is an integer of any one of 2 to 4, R³⁴ may be the same as or different from each other; and * denotes a bonding portion).

In a case where X° in the formula (1) is a divalent group including two benzene rings, the bonding positions of Z⁰¹ and X³⁴ on the benzene ring in the formula (6) are not limited. That is, the bonding positions of Z⁰¹ and X³⁴ on the benzene ring may be any of ortho positions, meta positions, and para positions. Similarly, in the formula (6), the bonding positions of Z⁰² and X³⁴ on the benzene ring are not limited. That is, the bonding positions of Z⁰² and X³⁴ on the benzene ring may be any of ortho positions, meta positions, and para positions.

In a case where X¹ in the formula (2) is a divalent group including two benzene rings, the bonding positions of Z¹¹ and X³⁴ on the benzene ring in the formula (6) are not limited. That is, the bonding positions of Z¹¹ and X³⁴ on the benzene ring may be any of ortho positions, meta positions, and para positions. Similarly, in the formula (6), the bonding positions of Z¹² and X³⁴ on the benzene ring are not limited. That is, the bonding positions of Z¹² and X³⁴ on the benzene ring may be any of ortho positions, meta positions, and para positions.

### (X³¹, X³², X³³)

X³¹, X³², and X³³ in the formula (5) are only required to be each independently a divalent group without limitation, and examples thereof include a hydrocarbon group optionally having a substituent. The hydrocarbon group is similar to that for X²¹ and X²² in the above formula (3).

### (X³⁴)

X³⁴ in the formula (6) is only required to be a divalent group without limitation, and examples thereof include a hydrocarbon group optionally having a substituent. The hydrocarbon group is similar to that for X²¹ and X²² in the above formula (3).

### (R³¹, R³²)

R³¹ and R³² in the formula (5) are only required to be a monovalent group without limitation, and examples thereof include a halogen group or a hydrocarbon group optionally having a substituent. Each of the halogen group and the hydrocarbon group optionally having a substituent is similar to that for R²¹ in the above formula (3).

### (R³³, R³⁴)

R³³ and R³⁴ in the formula (6) are only required to be a monovalent group without limitation, and examples thereof include a halogen group or a hydrocarbon group optionally having a substituent. Each of the halogen group and the hydrocarbon group optionally having a substituent is similar to that for R²¹ in the above formula (3).

### (Y⁰¹, Y⁰²)

Y⁰¹ and Y⁰² in the formula (1) are each independently, for example, a hydrogen group (-H), a hydroxy group (-OH), a halogen group (-X), a carboxy group (-COOH), an ester group (-COOR), or a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by substituting a part of carbon atoms of the hydrocarbon group (for example, a part of carbon atoms included in a main chain of the hydrocarbon group) with an element such as oxygen.

In the formula (1), it is preferable that one of (Y⁰¹)ₙ₀₁ and/or one of (Y⁰²)ₙ₀₂ is a hydroxy group (-OH). With one of (Y⁰¹)ₙ₀₁ and/or one of (Y⁰²)ₙ₀₂ being a hydroxy group (-OH), display quality and light resistance can be improved.

### (Y¹¹, Y¹², Y¹³, Y¹⁴)

In the formula (2), the bonding positions of Y¹¹ and Y¹² on the benzene ring are not limited. That is, the bonding positions of Y¹¹ and Y¹² on the benzene ring may be any of ortho positions, meta positions, and para positions. Similarly, in the formula (2), the bonding positions of Y¹³ and Y¹⁴ on the benzene ring are also not limited. That is, the bonding positions of Y¹³ and Y¹⁴ on the benzene ring may be any of ortho positions, meta positions, and para positions. In the formula (2), the bonding positions of Y¹¹ and Y¹² on one benzene and the bonding positions of Y¹³ and Y¹⁴ on the other benzene may be the same or different.

Y¹¹, Y¹², Y¹³, and Y¹⁴ in the formula (2) each independently represent, for example, a hydrogen group (-H), a hydroxy group (-OH), a halogen group, a carboxy group (-COOH), an ester group (-COOR), or a hydrocarbon group optionally having a substituent. Each of the halogen group and the hydrocarbon group optionally having a substituent is similar to that for Y⁰¹ and Y⁰² in the above formula (1).

In the formula (2), Y¹¹ and/or Y¹³ is preferably a hydroxy group (-OH) . With Y¹¹ and/or Y¹³ being a hydroxy group (-OH), display quality and light resistance can be improved.

### (Z⁰¹, Z⁰¹

and Z⁰² in the formula (1) are each independently, for example, a urea bond (-NHCONH-), an amide bond (-NHCO-, -OCHN-), or a hydrazide bond (-NHCOCONH-). From the viewpoint of improving the high temperature and high humidity storage characteristics, Z⁰¹ and Z⁰² are preferably urea bonds. In a case where Z⁰¹ is an amide bond, the nitrogen included in the amide bond may be bonded to benzene, or the carbon included in the amide bond may be bonded to benzene. In a case where Z⁰² is an amide bond, the nitrogen included in the amide bond may be bonded to benzene, or the carbon included in the amide bond may be bonded to benzene.

### (Z¹¹, Z¹²)

Z¹¹ and Z¹² in the formula (2) are each independently, for example, a urea bond (-NHCONH-), an amide bond (-NHCO-, -OCHN-), or a hydrazide bond (-NHCOCONH-). From the viewpoint of improving the high temperature and high humidity storage characteristics, Z¹¹ and Z¹² are preferably urea bonds. In a case where Z¹¹ is an amide bond, the nitrogen included in the amide bond may be bonded to benzene, or the carbon included in the amide bond may be bonded to benzene. In a case where Z¹² is an amide bond, the nitrogen included in the amide bond may be bonded to benzene, or the carbon included in the amide bond may be bonded to benzene.

### (Specific examples of developer)

Specifically, the developer in which X° in the formula (1) and X¹ in the formula (2) include one benzene ring contains, for example, at least one selected from the group consisting of compounds represented by the following formulas (7-1) to (7-6).

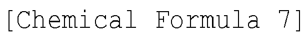

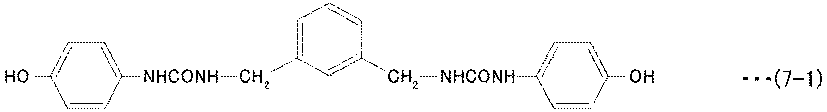

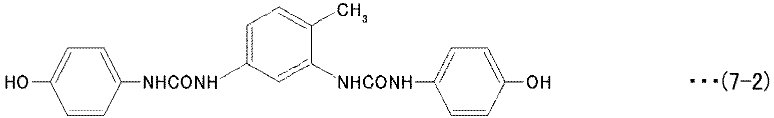

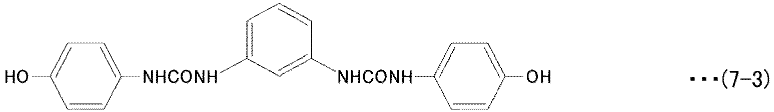

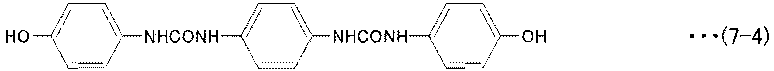

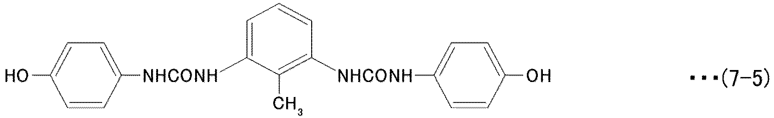

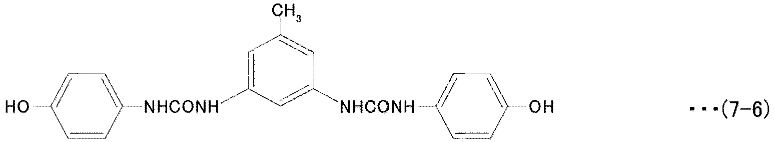

Specifically, the developer in which X° in the formula (1) and X¹ in the formula (2) include two benzene rings contains, for example, at least one selected from the group consisting of compounds represented by the following formulas (8-1) to (8-8).

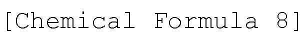

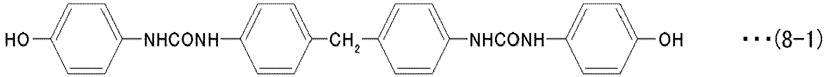

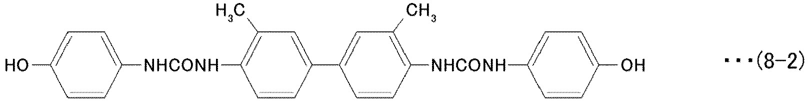

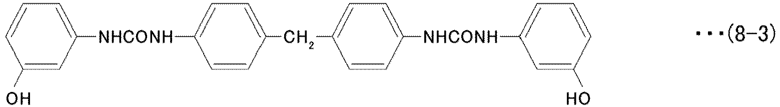

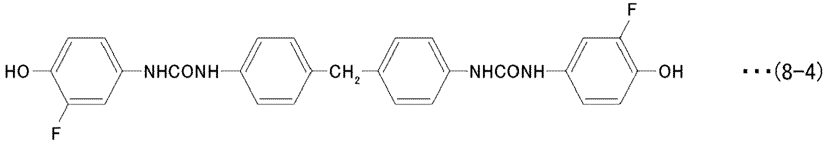

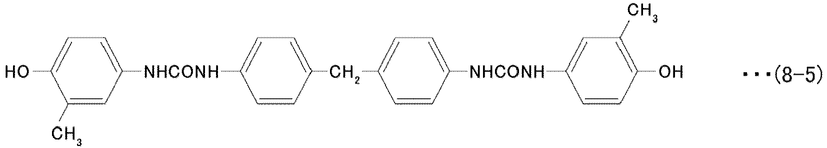

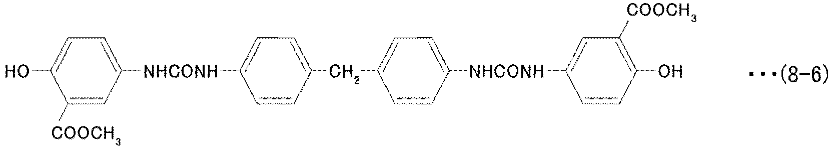

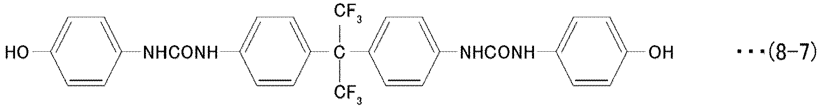

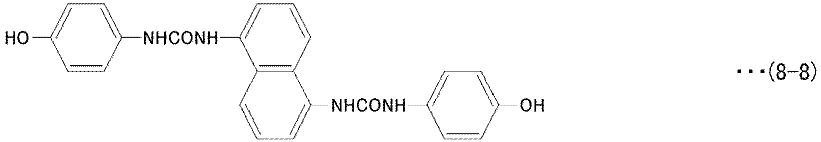

### (First, second and third photothermal conversion agents)

The first, second, and third photothermal conversion agents can generate heat by absorbing light in a predetermined wavelength region such as a near-infrared region. The first, second, and third photothermal conversion agents have absorption wavelength peaks different from each other. Specifically, the first photothermal conversion agent has an absorption wavelength peak at a wavelength λ₁. The second photothermal conversion agent has an absorption wavelength peak at a wavelength λ₂. The third photothermal conversion agent has an absorption wavelength peak at a wavelength λ₃. The wavelengths λ₁, λ₁, and λ₃ are different. The absorption wavelength peak is preferably in the near-infrared region. The near-infrared region is, for example, in a wavelength range of 700 nm or more and 2000 nm or less. As described above, since the first, second, and third photothermal conversion agents have absorption wavelength peaks different from each other, a desired layer among the color development layers 22A, 22B, and 22C can be selectively caused to develop color by irradiation with laser light. A near-infrared absorbing dye having almost no absorption in the visible region is preferably employed as the first, second, and third photothermal conversion agents.

The first, second, and third photothermal conversion agents contain, for example, at least one selected from the group consisting of a compound having a phthalocyanine skeleton (phthalocyanine dye), a compound having a squarylium skeleton (squarylium dye), an inorganic compound, and the like.

The inorganic compound includes, for example, at least one selected from the group consisting of metal complexes such as dithio complexes, diimmonium salts, aminium salts, graphite, carbon black, metal powder particles, metal oxides such as tricobalt tetraoxide, iron oxide, chromium oxide, copper oxide, titanium black, and indium tin oxide (ITO), metal nitrides such as niobium nitride, metal carbides such as tantalum carbide, metal sulfides, various magnetic powders, and the like. In addition, the inorganic compound may include a compound having a cyanine skeleton (cyanine dye) having excellent light resistance and heat resistance. Note that the excellent light resistance, as used herein, means that it is not decomposed by, for example, irradiation with light of a fluorescent lamp or the like under a use environment. The excellent heat resistance means that, for example, a film formed together with a polymer material does not change in maximum absorption peak value of the absorption spectrum by 20% or more after stored at 150°C for 30 minutes, for example. Examples of such a compound having a cyanine skeleton include compounds having, in the molecule, at least one of a counter ion being any one of SbF₆, PF₆, BF₄, ClO₄, CF₃SO₃, or (CF₃SO₃)₂N or a methine chain including a 5-membered ring or a 6-membered ring. Note that, although the compound having a cyanine skeleton used for the recording medium 10 in the first embodiment preferably has both any one of the above-described counter ions and a cyclic structure such as a 5-membered ring and a 6-membered ring in a methine chain, sufficient light resistance and heat resistance are secured as long as the compound has at least one of the counter ion or the cyclic structure.

### (First, second and third matrix resins)

The first, second, and third matrix resins preferably have a function of a binder. The first matrix resin is preferably one in which the first coloring compound, the first developer, and the first photothermal conversion agent are likely to be uniformly dispersed. The second matrix resin is preferably one in which the second coloring compound, the second developer, and the second photothermal conversion agent are likely to be uniformly dispersed. The third matrix resin is preferably one in which the third coloring compound, the third developer, and the third photothermal conversion agent are likely to be uniformly dispersed. The types of the first, second, and third matrix resins may be the same or different from each other.

The first, second, and third matrix resins contain, for example, at least one selected from the group consisting of a thermosetting resin, a thermoplastic resin, and the like. The first, second, and third matrix resins preferably contain a polycarbonate resin. With the first, second, and third matrix resins containing a polycarbonate resin, the light resistance of the background of the recording medium 10 can be improved. Here, the polycarbonate resin is a resin having a carbonate group (-O-(C=O)-O-) as a structural unit at least in the main chain. Therefore, other structural units may be included in the main chain in addition to the carbonate group.

The first, second, and third matrix resins may contain, instead of or together with the polycarbonate resin, at least one selected from the group consisting of polyvinyl chloride, polyvinyl acetate, a vinyl chloride-vinyl acetate copolymer, ethyl cellulose, polystyrene, a styrenic copolymer, a phenoxy resin, polyester, an aromatic polyester, polyurethane, a polyacrylate, a polymethacrylate, an acrylic acid copolymer, a maleic acid polymer, polyvinyl alcohol, modified polyvinyl alcohol, hydroxyethyl cellulose, carboxymethyl cellulose, starch, and the like.

### (Additives)

The color development layers 22A, 22B, and 22C may further contain at least one additive selected from the group consisting of a sensitizer, an ultraviolet absorber, and the like as necessary. The color development layers 22A, 22B, and 22C preferably contain an amine compound from the viewpoint of preventing coloring of the background.

In a case where the color development layers 22A, 22B, and 22C contain an amine compound, it is preferable that the color development layers 22A, 22B, and 22C contain at least one compound selected from the group consisting of an epoxy compound and a carbodiimide compound together with the amine compound. In a case where the color development layers 22A, 22B, and 22C contain an amine compound, there is a possibility that the reliability of the color-developed portion during high temperature and high humidity storage is deteriorated. However, in a case where the color development layers 22A, 22B, and 22C contain at least one compound selected from the group consisting of an epoxy compound and a carbodiimide compound together with the amine compound, the deterioration in reliability of the color-developed portion during high temperature and high humidity storage due to the amine compound can be prevented.

### (Adhesive layers 21A, 21B, 21C, 12)

The adhesive layer 21A is provided between the base material 11 and the color development layer 22A, and causes the base material 11 and the color development layer 22A to adhere to one another. The adhesive layer 21B is provided between the color development layer 22A and the color development layer 22B, and causes the color development layer 22A and the color development layer 22B to adhere to one another. The adhesive layer 21B may also serve as a heat insulating layer capable of thermally insulating the color development layer 22A and the color development layer 22B from each other. The adhesive layer 21C is provided between the color development layer 22B and the color development layer 22C, and causes the color development layer 22B and the color development layer 22C to adhere to one another. The adhesive layer 21C may also serve as a heat insulating layer capable of thermally insulating the color development layer 22B and the color development layer 22C from each other. The adhesive layer 12 is provided between the laminate 20 and the cover layer 13, and causes the laminate 20 and the cover layer 13 to adhere to one another.

The adhesive layers 21B, 21C, and 12 are transmissive with respect to laser light used for drawing on the recording medium 10 and visible light. The adhesive layer 21A may be either transmissive or non-transmissive with respect to laser light used for drawing on the recording medium 10 and visible light.

The adhesive layers 21A, 21B, 21C, and 12 preferably contain a thermosetting resin as a thermosetting adhesive. With the adhesive layers 21A, 21B, 21C, and 12 containing a thermosetting resin, a higher average peel strength (that is, an average peel strength of 5 N/cm or more) can be obtained as compared with the case where the respective layers are bonded together by pressure-sensitive adhesive layers. The thermosetting resin includes, for example, at least one selected from the group consisting of a silicone resin, an epoxy resin, a urea resin, a resorcinol resin, a melamine resin, a phenolic resin, a polyurethane resin, a polyester resin, a polyimide resin, an acrylic resin, a polyaromatic resin, and the like. The adhesive layers 21A, 21B, 21C, and 12 may contain, for example, various additives such as an ultraviolet absorber. The adhesive layers 21A, 21B, 21C, and 12 may be formed by coating, or may be formed from sheet-shaped materials. In a case where the sheet-shaped materials are used, process damage to other layers can be prevented.

The adhesive layers 21A, 21B, 21C, and 12 may contain an ultraviolet curable resin as an ultraviolet curable adhesive together with the thermosetting resin, or may contain an ultraviolet curable resin as an ultraviolet curable adhesive instead of the thermosetting resin. The ultraviolet curable resin includes, for example, at least one selected from the group consisting of an acrylic resin, an epoxy resin, and the like.

The thickness of the adhesive layer 21A is preferably 3 um or more and 100 um or less, more preferably 5 um or more and 50 um or less, still more preferably 10 um or more and 50 um or less, or 15 um or more and 50 um or less. In a case where the thickness of the adhesive layer 21A is less than 3 µm, there is a possibility that a desired adhesive force cannot be maintained due to an absolute lack of thickness. On the other hand, in a case where the thickness of the adhesive layer 21A exceeds 100 µm, the bending resistance of the recording medium 10 may decrease, and defects such as cracks may be likely to occur.

The thicknesses of the adhesive layers 21B and 21C are preferably 3 um or more and 100 um or less, more preferably 5 um or more and 50 um or less, still more preferably 10 um or more and 50 um or less, or 15 um or more and 50 um or less. In a case where the thicknesses of the adhesive layers 21B and 21C are less than 3 µm, there is a possibility that a desired adhesive force cannot be maintained due to an absolute lack of thickness. Furthermore, their heat insulating effects are insufficient as heat insulating layers and therefore, there is a possibility that, when a specific color development layer 22 generates heat and develops color by laser light irradiation, the heat is propagated to the adjacent color development layer 22 and the adjacent color development layer 22 unexpectedly develops color. That is, there is a possibility that a desired color cannot be represented due to color mixing. On the other hand, in a case were the thicknesses of the adhesive layers 21B and 21C exceed 100 µm, the adhesive layers may be less transmissive with respect to laser light used for drawing on the recording medium 10 and visible light. Furthermore, the bending resistance of the recording medium 10 may decrease, and defects such as cracks may be likely to occur.

The thickness of the adhesive layer 12 is preferably 3 um or more and 100 um or less, more preferably 5 um or more and 50 um or less, still more preferably 10 um or more and 50 um or less, or 15 um or more and 50 um or less. In a case where the thickness of the adhesive layer 12 is less than 3 µm, there is a possibility that a desired adhesive force cannot be maintained due to an absolute lack of thickness. On the other hand, in a case were the thickness of the adhesive layer 12 exceeds 100 um, the adhesive layer may be less transmissive with respect to laser light used for drawing on the recording medium 10 and visible light. Furthermore, the bending resistance of the recording medium 10 may decrease, and defects such as cracks may be likely to occur.

### (Average peel strength)

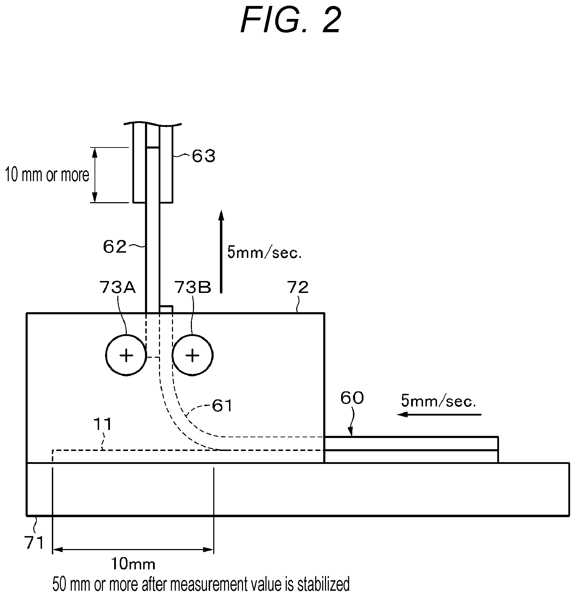

The average peel strength between the base material 11 and the laminate 20, the average peel strength between the color development layers 22 included in the laminate 20, and the average peel strength between the laminate 20 and the cover layer 13 are 5 N/cm or more, preferably 8 N/cm or more, more preferably 10 N/cm or more, and still more preferably 15 N/cm or more. With the average peel strength between the respective layers of 5 N/cm or more as described above, peeling of the base material 11 and the laminate 20 from each other, peeling of the color development layers 22 included in the laminate 20 from each other, and peeling of the laminate 20 and the cover layer 13 from each other can be prevented. Therefore, tampering of the recording medium 10 can be prevented. The average peel strength between the color development layers 22 included in the laminate 20 specifically means the average peel strength between the color development layer 22A and the color development layer 22B and the average peel strength between the color development layer 22B and the color development layer 22C. The upper limit value of the average peel strength between the base material 11 and the laminate 20, the average peel strength between the color development layers 22 included in the laminate 20, and the average peel strength between the laminate 20 and the cover layer 13 is not particularly limited, but is 20 N/cm or less, for example. In a case where the upper limit value of the average peel strength exceeds 20 N/cm, it is assumed that measurement becomes impossible because of a limit of a measurement gauge, or measurement becomes impossible due to breakage of a test piece 60 at a portion below a grip margin of an adherend 61 or a tension member 62 (see Fig. 2) .

The average peel strength between the base material 11 and the laminate 20 is determined by performing a 90 degree peel test. Hereinafter, the 90 degree peel test will be described with reference to Fig. 2.

First, the recording medium 10 is cut into a band shape having a width of 10 mm and a length of 100 mm to prepare the test piece 60, and the test piece is left for 24 hours or more in an atmosphere in a standard state at a temperature of 23 ± 1°C and a relative humidity of 50 ± 5%. Hereinafter, in the test piece 60, a laminated portion above the interface between the base material 11 and the laminate 20 is referred to as the adherend 61. Next, a portion between the base material 11 and the adherend 61 of the test piece 60 is cut with a sharp blade such as a cutter at one end portion in the longitudinal direction of the test piece 60 so that the adherend 61 is peeled off by a length of 20 mm in the longitudinal direction, and after a grip margin is prepared, the surface of the test piece 60 on the side of the base material 11 is fixed to a test stand 71 with a strong pressure-sensitive adhesive. As the pressure-sensitive adhesive, a pressure-sensitive adhesive having sufficiently high pressure-sensitive adhesive force, for example, a strong pressure-sensitive adhesive tape scotch (registered trademark) manufactured by 3M Company is selected so that the base material 11 is not peeled off from the test stand 71 when the peel strength between the base material 11 and the adherend 61 is measured. Fig. 2 illustrates an example in which the tension member 62 serves as the grip margin, but in a case where a clamp device (metal plates) 63 has a sufficient stroke to sandwich the adherend 61, the adherend 61 may be directly clamped without the tension member 62. As the tension member 62, a band-shaped film having sufficient strength is used which does not cause elongation or breakage during the measurement of the peel strength. In addition, one end portion of the tension member 62 is bonded to the adherend 61 with a sufficiently high adhesive force so as not to be peeled off from the adherend 61 during the measurement of the peel strength.

Next, the grip margin of the tension member 62 is interposed between a set of movable rolls 73A and 73B of a jig 72, and then the grip margin is sandwiched and fixed by 10 mm or more by the clamp device (metal plates) 63 of a tensile compression tester SV-55C 2H manufactured by IMADA-SS Corporation. The movable rolls 73A and 73B serve as fulcrums of peeling in the 90 degree peel test. Next, the 90 degree peel test is performed using the tensile compression tester while the test force [N/cm] and the stroke [mm] are monitored in terms of voltage values by, for example, a data logger manufactured by Keyence Corporation, and the voltage values are converted into forces and stored in a memory as CSV output data. Note that the 90 degree peel test described above is performed at a tensile speed of 5 mm/sec in a standard state of a temperature of 23 ± 1°C and a relative humidity of 50 ± 5%. The stroke is set to 50 mm or more.

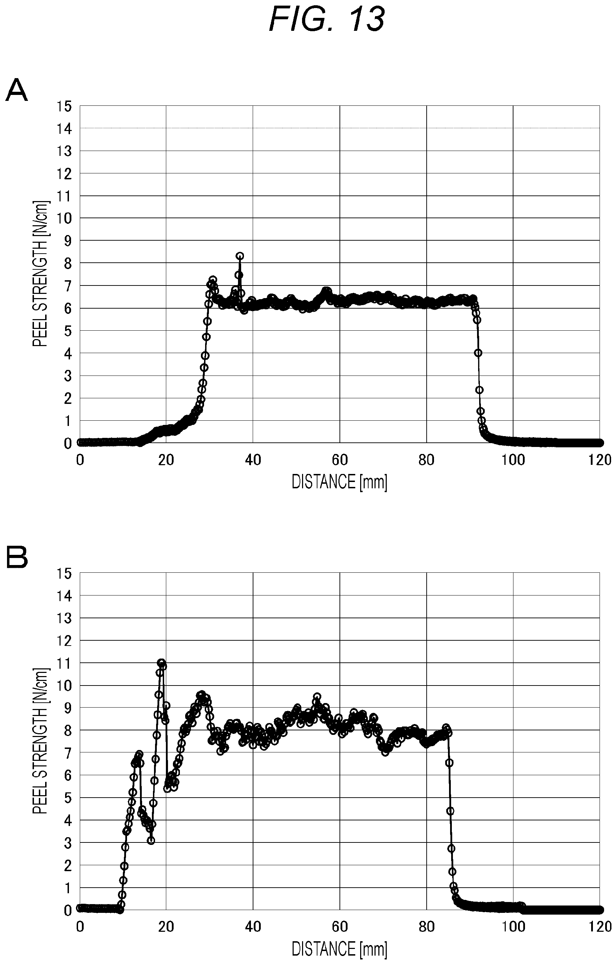

The 90 degree peel test described above is performed 3 times in total, in which a point where the peel strength is stabilized (a position where the development of force becomes gentle; for example, a distance of 32 mm or more in Fig. 13A) is taken as a start point (0 mm), and pieces of CSV output data up to a point at a relative distance of 50 mm from the start point are arithmetically averaged to calculate an average value. Thus, the average peel strength between the base material 11 and the laminate 20 (adherend 61) is obtained. However, a point where the peeling force suddenly decreases (spike) is excluded from the CSV output data. Fig. 13A shows an example of data obtained by the 90 degree peel test.

The average peel strength between the color development layers 22 included in the laminate 20 and the average peel strength between the laminate 20 and the cover layer 13 are determined by a procedure similar to that for the average peel strength between the base material 11 and the laminate 20 described above.

An average value of minimum peel strengths among peel strengths between the respective layers constituting the recording medium 10 is 5 N/cm or more, preferably 8 N/cm or more, more preferably 10 N/cm or more, and still more preferably 15 N/cm or more. With the average value of the minimum peel strengths of 5 N/cm or more as described above, peeling of the respective layers constituting the recording medium 10 from each other can be prevented. Therefore, tampering of the recording medium 10 can be prevented.

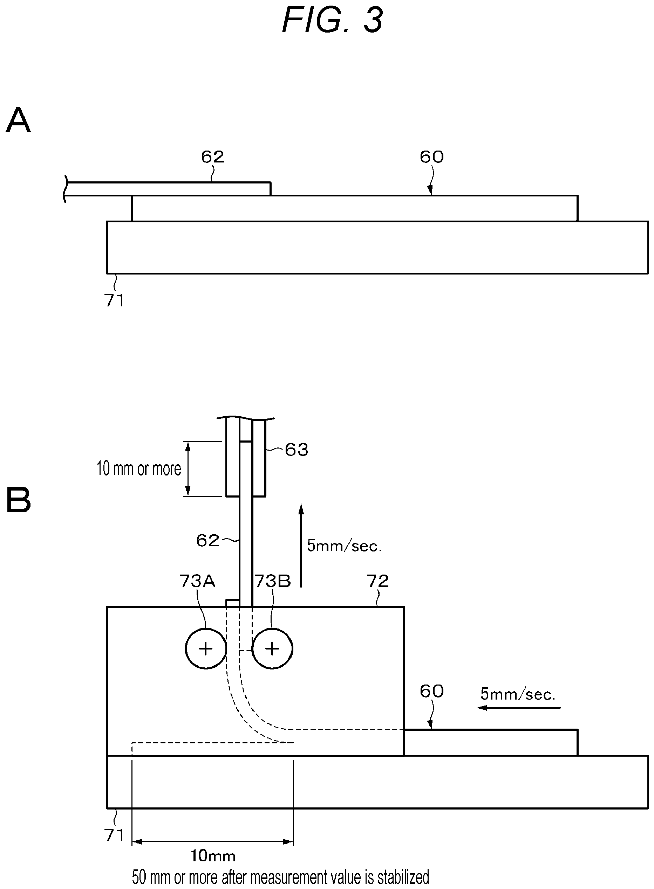

The average value of the minimum peel strengths among the peel strengths between the respective layers constituting the recording medium 10 is obtained by performing a 90 degree peel test. Hereinafter, the 90 degree peel test will be described with reference to Figs. 3A and 3B.

First, the recording medium 10 is cut into a band shape having a width of 10 mm and a length of 100 mm to prepare the test piece 60, and the test piece is left for 24 hours or more in an atmosphere in a standard state at a temperature of 23 ± 1°C and a relative humidity of 50 ± 5%. Next, as shown in Fig. 3A, the surface of the test piece 60 on the side of the base material 11 is fixed to the test stand 71 with a strong pressure-sensitive adhesive, and the tension member 62 is bonded to the surface of the test piece 60 on the side of the cover layer 13. As the tension member 62, a band-shaped film having sufficient strength is used which does not cause elongation or breakage during the measurement of the average peel strength. In addition, one end portion of the tension member 62 is bonded to the adherend 61 with a sufficiently high adhesive force so as not to be peeled off from the adherend 61 during the measurement of the average peel strength.

Next, as shown in Fig. 3B, the grip margin of the tension member 62 is interposed between the set of movable rolls 73A and 73B of the jig 72, and then the grip margin is sandwiched and fixed by 10 mm or more by the clamp device (metal plates) 63 of the tensile compression tester SV-55C 2H manufactured by IMADA-SS Corporation. The subsequent steps are similar to those of the method for measuring the average peel strength between the base material 11 and the laminate 20. The average value of the minimum peel strengths among the peel strengths between the respective layers constituting the recording medium 10 is obtained as described above.

### [1.2 Method of manufacturing recording medium]

Hereinafter, an example of a method of manufacturing the recording medium 10 according to the first embodiment will be described.

### (Step of forming first laminated film)

First, the first developer and the first matrix resin are dissolved and dispersed in a solvent (for example, methyl ethyl ketone). Next, the first coloring compound in the non-colored state and the first photothermal conversion agent are added to this solution, thereby preparing a first color development layer-forming coating material. Subsequently, the first color development layer-forming coating material is applied onto a first film and dried. Thus, a first laminated film including the color development layer 22A and the first film is obtained.

### (Step of forming second laminated film)

A second laminated film including the color development layer 22B and a second film is obtained in a manner similar to that in the step of forming the first laminated film, except that the second matrix resin, the second coloring compound, the second developer, and the second photothermal conversion agent are used instead of the first matrix resin, the first coloring compound, the first developer, and the first photothermal conversion agent.

### (Step of forming third laminated film)

A third laminated film including the color development layer 22C and a third film is obtained in a manner similar to that in the step of forming the first laminated film, except that the third matrix resin, the third coloring compound, the third developer, and the third photothermal conversion agent are used instead of the first matrix resin, the first coloring compound, the first developer, and the first photothermal conversion agent.

### (Lamination step)

First, a thermosetting resin is applied onto the base material 11 to form a coating. Next, the first laminated film is placed on the coating such that the color development layer 22A is on the coating side, and then the coating is thermally cured by pressurization under application of heat by, for example, a step of sandwiching the entire laminated body between metal plates or a step of conveying the entire laminated body sandwiched between a metal roll (for example, a SUS roll) and a rubber roll (for example, a heat-resistant silicone roll). Thus, the base material 11 and the color development layer 22A adhere to each other via the adhesive layer 21A.

Next, a thermosetting resin is applied onto the color development layer 22A to form a coating. Next, the second laminated film is placed on the coating such that the color development layer 22B is on the coating side, and then the coating is thermally cured by pressurization under application of heat by, for example, a step of sandwiching the entire laminated body between metal plates or a step of conveying the entire laminated body sandwiched between a metal roll (for example, a SUS roll) and a rubber roll (for example, a heat-resistant silicone roll). Thus, the color development layer 22A and the color development layer 22B adhere to each other via the adhesive layer 21B.

Next, a thermosetting resin is applied onto the color development layer 22B to form a coating. Next, the third laminated film is placed on the coating such that the color development layer 22C is on the coating side, and then the coating is thermally cured by pressurization under application of heat by, for example, a step of sandwiching the entire laminated body between metal plates or a step of conveying the entire laminated body sandwiched between a metal roll (for example, a SUS roll) and a rubber roll (for example, a heat-resistant silicone roll). Thus, the color development layer 22B and the color development layer 22C adhere to each other via the adhesive layer 21C.

Next, a thermosetting resin is applied onto the color development layer 22C to form a coating. Next, the cover layer 13 is placed on the coating, and then the coating is thermally cured by pressurization under application of heat by, for example, a step of sandwiching the entire laminated body between metal plates or a step of conveying the entire laminated body sandwiched between a metal roll (for example, a SUS roll) and a rubber roll (for example, a heat-resistant silicone roll). Thus, the color development layer 22C and the cover layer 13 adhere to each other via the adhesive layer 12. In this way, the recording medium 10 illustrated in Fig. 1 is obtained.

### [1.3 Recording method of recording medium]

Hereinafter, an example of a recording method of the recording medium 10 according to the first embodiment will be described.

The color development layer 22A develops a magenta color as follows. When a predetermined position of the color development layer 22A is irradiated with near-infrared laser light having a peak wavelength λ₁, the first photothermal conversion agent included in the portion irradiated with the laser light absorbs the near-infrared laser light and generates heat. Due to this heat generation, the first developer melts, a color reaction (color development reaction) occurs between the first developer and the first coloring compound, and the portion irradiated with the laser light develops a magenta color.

The color development layer 22B develops a cyan color as follows. When a predetermined position of the color development layer 22B is irradiated with near-infrared laser light having a peak wavelength λ₂, the portion irradiated with the laser light develops a cyan color by a reaction similar to that of the above-described color development layer 22A.

The color development layer 22C develops a yellow color as follows. When a predetermined position of the color development layer 22B is irradiated with near-infrared laser light having a peak wavelength λ₃, the portion irradiated with the laser light develops a yellow color by a reaction similar to that of the above-described color development layer 22A.

As described above, the predetermined positions of the color development layers 22A, 22B, and 22C develop magenta, cyan, and yellow colors, respectively, whereby a desired full-color image is drawn on a recording medium 10A.

### [1.4 Operation and effect]

As described above, in the recording medium 10 according to the first embodiment, the average peel strength between the base material 11 and the laminate 20, the average peel strength between the color development layers 22 included in the laminate 20, and the average peel strength between the laminate 20 and the cover layer 13 are 5 N/cm or more. This can prevent peeling of the base material 11 and the laminate 20 from each other, peeling of the color development layers 22 included in the laminate 20 from each other, and peeling of the laminate 20 and the cover layer 13 from each other, so that excellent fastness can be secured. Therefore, tampering or the like of the recording medium 10 can be prevented, and security of the recording medium 10 can be improved.

In the recording medium 10 according to the first embodiment, the color development layers 22A, 22B, and 22C can exhibit magenta, cyan, and yellow colors, respectively, in the color-developed state. Therefore, a desired image can be drawn in full color.

### <2 Second embodiment>

### [2.1 Configuration of recording medium]

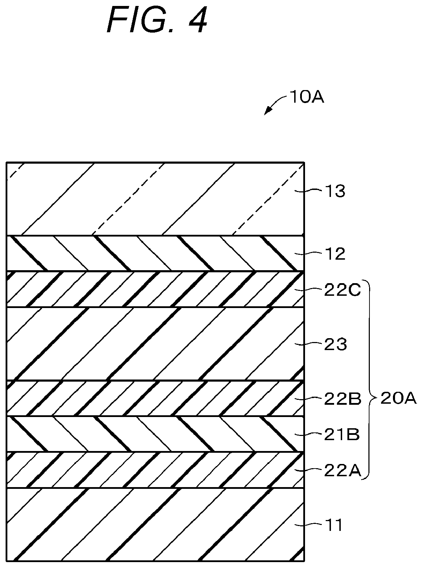

Hereinafter, an example of a configuration of the recording medium 10A according to a second embodiment will be described with reference to Fig. 4. The recording medium 10A is different from the recording medium 10 according to the first embodiment in including a laminate 20A instead of the laminate 20. The laminate 20A is different from the laminate 20 in the first embodiment in that the laminate 20A does not include the adhesive layer 21A and includes a base material (second base material) 23 instead of the adhesive layer 21C. The adhesive layer 21B included in the laminate 20 in the second embodiment is an example of the fourth adhesive layer.

The base material 11 has a first surface on which the laminate 20A is provided and a second surface opposite to the first surface. The color development layer 22A is directly formed on the first surface of the base material 11. Since the color development layer 22A is directly formed on the first surface of the base material 11 in this manner, the peel strength between the color development layer 22A and the base material 11 can be increased as compared with the case where the color development layer 22A is bonded to the first surface of the base material 11 via a pressure-sensitive adhesive layer.

A base material 23 is a support that supports the color development layers 22B and 22C. The base material 23 may also serve as a heat insulating layer capable of thermally insulating the color development layer 22B and the color development layer 22C from each other. The base material 23 preferably contains a material having excellent heat resistance and excellent dimensional stability in the planar direction. The base material 23 is transmissive with respect to laser light used for drawing on the recording medium 10A and visible light. The base material 23 has, for example, a plate shape or a film shape. The thickness of the base material 23 is preferably 3 um or more and 100 um or less, and more preferably 5 um or more and 50 um or less. In a case were the thickness of the base material 23 is less than 3 um, there is a possibility that a sufficient heat insulating effect as a heat insulating layer cannot be obtained. On the other hand, in a case were the thickness of the base material 23 exceeds 100 um, the base material may be less transmissive with respect to laser light used for drawing on the recording medium 10A and visible light. Furthermore, the bending resistance of the recording medium 10A may decrease, and defects such as cracks may be likely to occur.

The base material 23 has a first surface on which laser light used for drawing on the color development layer 22A or the color development layer 22B is incident and a second surface from which the above-described laser light is emitted. The color development layer 22C is directly formed on the first surface of the base material 23. Since the color development layer 22C is directly formed on the first surface of the base material 23 in this manner, the peel strength between the color development layer 22C and the base material 23 can be increased as compared with the case where the color development layer 22C is bonded to the first surface of the base material 23 via a pressure-sensitive adhesive layer. The color development layer 22B is directly formed on the second surface of the base material 23. Since the color development layer 22B is directly formed on the second surface of the base material 23 in this manner, the peel strength between the color development layer 22B and the base material 23 can be increased as compared with the case where the color development layer 22B is bonded to the second surface of the base material 23 via a pressure-sensitive adhesive layer.

The base material 23 may have, for example, rigidity or flexibility. In a case where a flexible material is used as the base material 23, a flexible recording medium 10A can be achieved. Examples of the base material 23 having rigidity include a wafer, a glass substrate, and the like. Examples of the base material 23 having flexibility include flexible glass, a film, paper, and the like. The base material 23 may contain a material similar to that of the base material 11.

### (Average peel strength)

The average peel strength between the base material 11 and the color development layer 22A, the average peel strength between the color development layer 22A and the color development layer 22B, the average peel strength between the color development layer 22B and the base material 23, the average peel strength between the base material 23 and the color development layer 22C, and the average peel strength between the color development layer 22C and the cover layer 13 are 5 N/cm or more, preferably 8 N/cm or more, more preferably 10 N/cm or more, and still more preferably 15 N/cm or more. With the peel strength between the respective layers of 5 N/cm or more as described above, peeling of the base material 11 and the color development layer 22A from each other, peeling of the color development layer 22A and the color development layer 22B from each other, peeling of the color development layer 22B and the base material 23 from each other, peeling of the base material 23 and the color development layer 22C from each other, and peeling of the color development layer 22C and the cover layer 13 from each other can be prevented. Therefore, tampering of the recording medium 10A can be prevented.

The average peel strength between the base material 11 and the color development layer 22A, the average peel strength between the color development layer 22A and the color development layer 22B, the average peel strength between the color development layer 22B and the base material 23, the average peel strength between the base material 23 and the color development layer 22C, and the average peel strength between the color development layer 22C and the cover layer 13 are determined in a manner similar to that for the average peel strength between the base material 11 and the laminate 20 in the first embodiment.

An average value of minimum peel strengths among peel strengths between the respective layers constituting the recording medium 10A is 5 N/cm or more, preferably 8 N/cm or more, more preferably 10 N/cm or more, and still more preferably 15 N/cm or more. With the average value of the minimum peel strengths of 5 N/cm or more as described above, peeling of the respective layers constituting the recording medium 10A from each other can be prevented. Therefore, tampering of the recording medium 10A can be prevented.

The average value of the minimum peel strengths among the peel strengths between the respective layers constituting the recording medium 10A is obtained in a manner similar to that for the average value of the minimum peel strengths among the peel strengths between the respective layers constituting the recording medium 10 in the first embodiment.

### [2.2 Method of manufacturing recording medium]

Hereinafter, an example of a method of manufacturing the recording medium 10A according to the second embodiment will be described.

### (Step of forming first laminate)

First, the first developer and the first matrix resin are dissolved and dispersed in a solvent (for example, methyl ethyl ketone). Next, the first coloring compound in the non-colored state and the first photothermal conversion agent are added to and dispersed in this solution. Thus, the first color development layer-forming coating material is prepared. Subsequently, the first color development layer-forming coating material is applied onto the first surface of the base material 11 and dried, thereby forming the color development layer 22A. Thus, a first laminate is obtained.

### (Step of forming second laminate)

First, the second developer and the second matrix resin are dissolved and dispersed in a solvent (for example, methyl ethyl ketone). Next, the second coloring compound in the non-colored state and the second photothermal conversion agent are added to and dispersed in this solution. Thus, a second color development layer-forming coating material is prepared.

Subsequently, an easy adhesion treatment such as a plasma treatment is performed on the second surface of the base material 23 as necessary, and then the second color development layer-forming coating material is applied onto the second surface of the base material 23 and dried, thereby forming the color development layer 22B.

Next, the third developer and the third matrix resin are dissolved and dispersed in a solvent (for example, methyl ethyl ketone). Next, the third coloring compound in the non-colored state and the third photothermal conversion agent are added to and dispersed in this solution. Thus, a third color development layer-forming coating material is prepared. Subsequently, an easy adhesion treatment such as a plasma treatment is performed on the first surface of the base material 23 as necessary, and then the third color development layer-forming coating material is applied onto the first surface of the base material 23 and dried, thereby forming the color development layer 22C. Thus, a second laminate is obtained.

### (Lamination step)

First, a thermosetting resin is applied onto the color development layer 22A of the first laminate to form a coating. Next, the second laminate is placed on the coating such that the color development layer 22B is on the coating side, and then the coating is thermally cured by pressurization under application of heat by, for example, a step of sandwiching the entire laminated body between metal plates or a step of conveying the entire laminated body sandwiched between a metal roll (for example, a SUS roll) and a rubber roll (for example, a heat-resistant silicone roll). Thus, the color development layer 22A and the color development layer 22B adhere to each other via the adhesive layer 21B.

Next, a thermosetting resin is applied onto the color development layer 22C to form a coating. Next, the cover layer 13 is placed on the coating, and then the coating is thermally cured by pressurization under application of heat by, for example, a step of sandwiching the entire laminated body between metal plates or a step of conveying the entire laminated body sandwiched between a metal roll (for example, a SUS roll) and a rubber roll (for example, a heat-resistant silicone roll). Thus, the color development layer 22C and the cover layer 13 adhere to each other via the adhesive layer 12. In this way, the recording medium 10A illustrated in Fig. 4 is obtained.

### [2.3 Operation and effect]

In the second embodiment, the average peel strength between the base material 11 and the color development layer 22A, the average peel strength between the color development layer 22A and the color development layer 22B, the average peel strength between the color development layer 22B and the base material 23, the average peel strength between the base material 23 and the color development layer 22C, and the average peel strength between the color development layer 22C and the cover layer 13 are 5 N/cm or more. With this configuration, the effects similar to those of the first embodiment can be obtained.

In the second embodiment, the color development layer 22A is formed directly on the first surface of the base material 11, the color development layer 22C is formed directly on the first surface of the base material 23, and the color development layer 22B is formed directly on the second surface of the base material 23. With this configuration, the number of layers of the adhesive layer 21 can be reduced as compared with the laminate 20 according to the first embodiment. Therefore, the layer configuration of the laminate 20A can be simplified as compared with the laminate 20 according to the first embodiment.

### <3 Third embodiment>

In the third embodiment, an example of a card provided with the recording medium 10 according to the first embodiment or the recording medium 10A according to the second embodiment will be described.

### [3.1 Configuration of card]

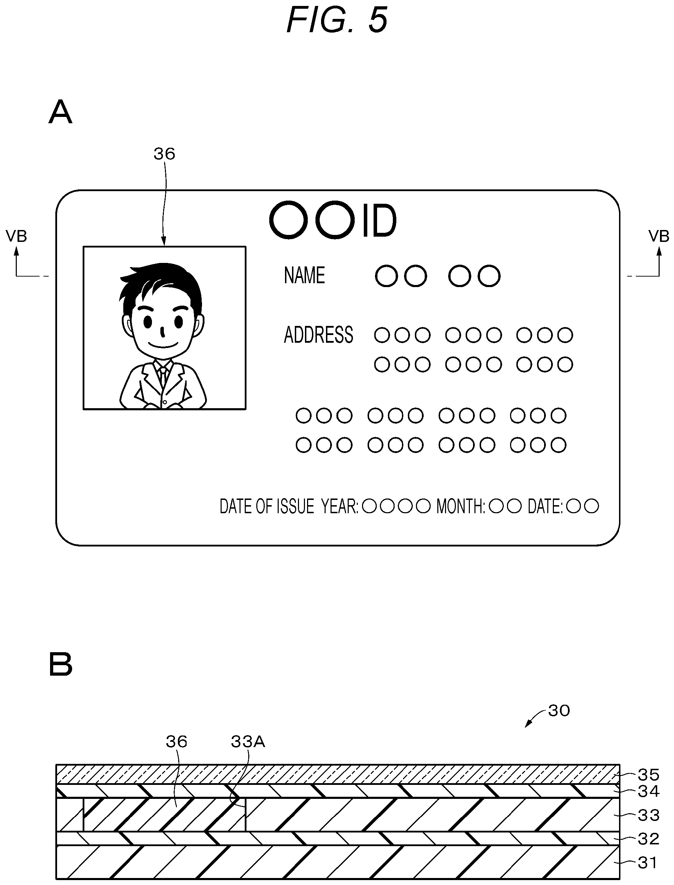

Hereinafter, an example of a configuration of a card 30 according to the third embodiment will be described with reference to Figs. 5A and 5B. The card 30 sequentially includes a base material (card base material) 31, an adhesive layer 32, an intermediate layer 33, an adhesive layer 34, and an overlay layer 35. The intermediate layer 33 includes a recording medium 36.

The card 30 is an ID card (for example, an employee ID card, a membership card, a student ID card, and the like). The ID card is an example of card-type identification. In the third embodiment, a case where the card 30 is an ID card will be described, but the type of card provided with the recording medium 36 is not limited thereto. The card provided with the recording medium 36 may be, for example, a card such as a security card, a financial payment card (for example, a credit card, a cash card, or the like), a driver's license, a health insurance card, a basic resident registration card, a personal number card (an individual number card), or a personal transaction card (for example, a prepaid card, a points card, or the like). The card 30 may be a contactless IC card.

### (Base material 31)

A base material 31 is a support that supports the intermediate layer 33. The base material 31 has a rectangular thin plate shape. The base material 31 has a first surface (front surface) on which the adhesive layer 32, the intermediate layer 33, the adhesive layer 34, and the overlay layer 35 are laminated, and a second surface (back surface) opposite to the first surface. The base material 31 may have a color such as white. A pattern, a picture, a photograph, a character, a combination of two or more thereof, or the like (hereinafter referred to as a "pattern or the like") may be printed on the first surface of the base material 31. The base material 31 may include an integrated circuit (IC) chip, an antenna coil, and the like on the first surface.

The base material 31 contains, for example, plastic. The base material 31 may contain at least one selected from the group consisting of a colorant, an antistatic agent, a flame retardant, a surface modifier, and the like as necessary.

The plastic includes, for example, at least one selected from the group consisting of an ester resin, an amide resin, an olefin resin, a vinyl resin, an acrylic resin, an imide resin, a styrenic resin, an engineering plastic, and the like. In a case where the base material 31 contains two or more resins, the two or more resins may be mixed, copolymerized, or laminated.

The ester resin includes, for example, at least one selected from the group consisting of polyethylene terephthalate (PET), polybutylene terephthalate (PBT), polyethylene naphthalate (PEN), a polyethylene terephthalate-isophthalate copolymer, a terephthalic acid-cyclohexanedimethanol-ethylene glycol copolymer, and the like. The amide resin includes, for example, at least one selected from the group consisting of nylon 6, nylon 66, nylon 610, and the like. The olefin resin includes, for example, at least one selected from the group consisting of polyethylene (PE), polypropylene (PP), polymethylpentene (PMP), and the like. The vinyl resin includes, for example, polyvinyl chloride (PVC).

The acrylic resin includes, for example, at least one selected from the group consisting of polyacrylate, polymethacrylate, polymethyl methacrylate (PMMA), and the like. The imide resin includes, for example, at least one selected from the group consisting of polyimide (PI), polyamideimide (PAI), polyetherimide (PEI), and the like. The styrenic resin includes, for example, at least one selected from the group consisting of polystyrene (PS), high-impact polystyrene, an acrylonitrile-styrene resin (AS resin), an acrylonitrile-butadiene-styrene resin (ABS resin), and the like. The engineering plastic includes, for example, at least one selected from the group consisting of polycarbonate (PC), polyarylate (PAR), polysulfone (PSF), polyethersulfone (PES), polyphenylene ether (PPE), polyphenylene sulfide (PPS), polyether ketone (PEK), polyether-ether ketone (PEEK), polyphenylene oxide (PPO), polyether sulfite, and the like.

### (Intermediate layer 33)

The intermediate layer 33 is provided between the base material 31 and the overlay layer 35. More specifically, the intermediate layer 33 is provided on the first surface of the base material 31, and the adhesive layer 32 is sandwiched between the base material 31 and the intermediate layer 33. The intermediate layer 33 includes an accommodation part 33A for accommodating the recording medium 36. The accommodation part 33A is provided in a part of the plane of the intermediate layer 33. The accommodation part 33A may be a through hole penetrating in the thickness direction of the intermediate layer 33. The intermediate layer 33 is for controlling the difference in level formed by the recording medium 36 when the recording medium 36 is sandwiched between the base material 31 and the overlay layer 35. The intermediate layer 33 has substantially the same thickness as the recording medium 36, and covers the first surface of the base material 31 other than the area where the recording medium 36 is provided.

The intermediate layer 33 has a film shape. The intermediate layer 33 may be transmissive with respect to visible light. The intermediate layer 33 contains plastic. As the plastic, a material similar to that of the base material 31 can be exemplified.

### (Overlay layer 35)

The overlay layer 35 is provided on the intermediate layer 33 and the recording medium 36, and covers the intermediate layer 33 and the recording medium 36. The adhesive layer 34 is sandwiched between the intermediate layer 33 and the recording medium 36 and the overlay layer 35. The overlay layer 35 protects the internal members of the card 30 (that is, the recording medium 36 and the intermediate layer 33) and maintains the mechanical reliability of the card 30.

The overlay layer 35 has a film shape. The overlay layer 35 is transmissive with respect to visible light. The overlay layer 35 contains plastic. As the plastic, a material similar to that of the base material 31 can be exemplified. A pattern or the like may be printed on at least one surface of the overlay layer 35.

### (Adhesive layer 32, 34)

The adhesive layer 32 is provided between the base material 31 and the intermediate layer 33, and causes the base material 31 and the intermediate layer 33 to adhere to one another. The adhesive layer 34 is provided between the intermediate layer 33 and the overlay layer 35, and causes the intermediate layer 33 and the overlay layer 35 to adhere to one another. The adhesive layers 32 and 34 contain a thermosetting adhesive. The thermosetting adhesive includes a thermosetting resin. The thermosetting resin includes, for example, at least one selected from the group consisting of an epoxy resin, a urethane resin, and the like.

### (Recording medium 36)

The recording medium 36 is the recording medium 10 according to the first embodiment or the recording medium 10A according to the second embodiment. The recording medium 36 is provided between the base material 31 and the overlay layer 35. The recording medium 36 is accommodated in the accommodation part 33A such that the base material 11 of the recording medium 36 faces the base material 31. A face photograph or the like is drawn on the recording medium 36. However, the information drawn on the recording medium 36 is not limited to the face photograph, and may be ID information for security or the like.

The recording medium 36 has a first surface facing the overlay layer 35 and a second surface facing the base material 31. It is preferable that the first surface and/or the second surface of the recording medium 36 be subjected to easy adhesion treatment such as plasma treatment from the viewpoint of improving adhesion. In the present specification, the term "and/or" means "at least one", and for example, in a case where the term is used in a phrase "X and/or Y", this phrase means three cases of "only X", "only Y", and "X and Y".

### [3.2 Method of manufacturing card]

Hereinafter, an example of a method of manufacturing the card 30 according to the third embodiment will be described.

First, a thermosetting resin as the thermosetting adhesive is applied to the first surface of the base material 31 to form the adhesive layer 32. Next, after the intermediate layer 33 is placed on the adhesive layer 32, the recording medium 36 is fitted into the accommodation part 33A of the intermediate layer 33. Note that the intermediate layer 33 in which the recording medium 36 is fitted in advance in the accommodation part 33A may be placed on the adhesive layer 32. Instead, the adhesive layer 32 may be formed by applying a thermosetting resin onto the intermediate layer 33 in which the recording medium 36 is fitted in advance in the accommodation part 33A, and then placing the intermediate layer 33 on the first surface of the base material 31 so as to sandwich the coating therebetween. Alternatively, the adhesive layer 32 may be formed by bonding a sheet, which is formed in advance by applying a thermosetting resin to a separator or the like, to the first surface of the base material 31 or to the intermediate layer 33 in which the recording medium 36 is fitted in advance in the accommodation part 33A, by means of thermal lamination or the like.

Next, a thermosetting resin as the thermosetting adhesive is applied onto the intermediate layer 33 to form the adhesive layer 34, and then the overlay layer 35 is placed on the adhesive layer 34. Next, the obtained laminate is sandwiched between metal plates and pressurized while being heated, thereby thermally curing the adhesive layer 32 and the adhesive layer 34. Thus, the target card 30 is obtained. The adhesive layer 34 may be formed by applying a thermosetting resin to the overlay layer 35 and then placing the overlay layer 35 on the intermediate layer 33 so as to sandwich the coating therebetween. Instead, the adhesive layer 34 may be formed by bonding a sheet, which is formed in advance by applying a thermosetting resin to a separator or the like, to the overlay layer 35 or the intermediate layer 33 by means of thermal lamination or the like.

### [3.3 Operation and effect]

As described above, in the card 30 according to the third embodiment, the base material 31 and the intermediate layer 33 are bonded to each other via the adhesive layer 32 containing the thermosetting adhesive, and the intermediate layer 33 and the overlay layer 35 are bonded to each other via the adhesive layer 32 containing the thermosetting adhesive. With this configuration, the base material 31 and the intermediate layer 33, and the intermediate layer 33 and the overlay layer 35 can firmly adhere to one another. Therefore, tampering can be prevented more reliability.

Since the recording medium 36 is fitted in the accommodation part 33A of the intermediate layer 33, it can be made difficult to visually recognize the boundary between the recording medium 36 and the intermediate layer 33 in the in-plane direction of the card 30. Thus, it is difficult to recognize a portion where the recording medium 36 is provided in the plane of the card 30. Therefore, tampering can be prevented more reliability.

Since the recording medium 36 is sealed in the inner portion of the card 30, the influence of moisture on the recording medium 36 can be reduced.

### <4 Fourth embodiment>

In a fourth embodiment, an example of a card having a configuration different from that of the third embodiment will be described.

### [4.1 Configuration of card]

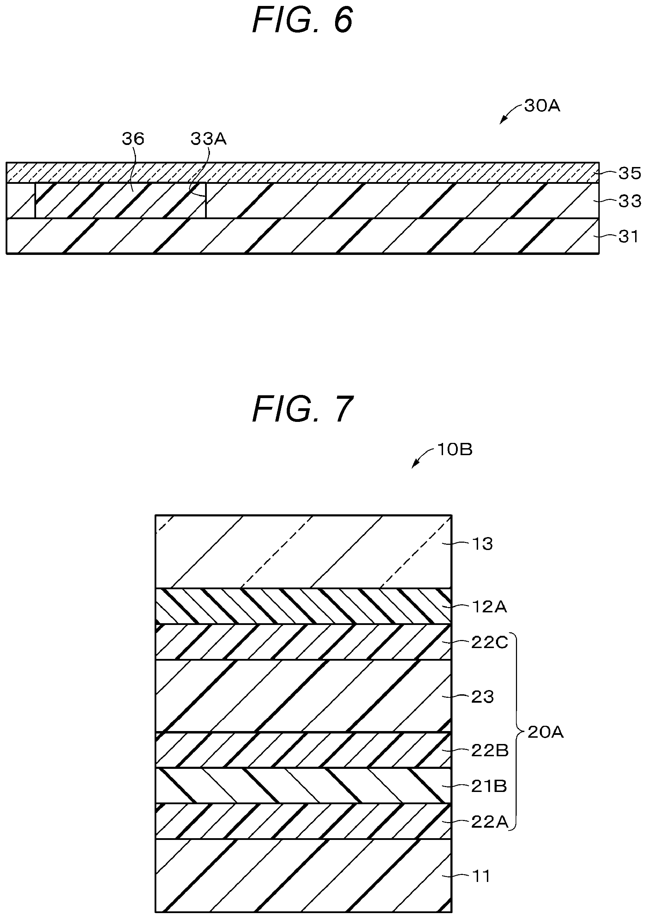

Hereinafter, an example of a configuration of a card 30A according to the fourth embodiment will be described with reference to Fig. 6. The card 30A is different from the card 30 according to the third embodiment in that the card 30A does not include the adhesive layer 32 and the adhesive layer 34, and in that the base material 31 and the intermediate layer 33, and the intermediate layer 33 and the overlay layer 35 are bonded by fusion.

In the fourth embodiment, it is preferable that the base material 31, the intermediate layer 33, and the overlay layer 35 contain a thermoplastic resin as plastic. With the base material 31, the intermediate layer 33, and the overlay layer 35 containing the thermoplastic resin, the interlayer adhesion strength by fusion can be enhanced. From the viewpoint of reducing damage to the recording medium 36, the thermoplastic resin is preferably capable of thermally fusing the layers of the card 30A together in a temperature range of 130°C or more and 200°C or less.

The base material 31, the intermediate layer 33, and the overlay layer 35 may contain the same type of thermoplastic resin, but the base material 31, the intermediate layer 33, and the overlay layer 35 are not necessarily required to contain the same type of thermoplastic resin. In a case where the base material 31, the intermediate layer 33, and the overlay layer 35 do not contain the same type of thermoplastic resin, one layer of the base material 31, the intermediate layer 33, and the overlay layer 35 may contain a thermoplastic resin different in type from the other two layers, and the base material 31, the intermediate layer 33, and the overlay layer 35 may contain thermoplastic resins different in type from each other.

In a case where the base material 31, the intermediate layer 33, and the overlay layer 35 contain the same type of thermoplastic resin, it is preferable that the base material 31, the intermediate layer 33, and the overlay layer 35 contain at least one selected from the group consisting of a semi-crystalline thermoplastic resin and an amorphous thermoplastic resin from the viewpoint of improving the interlayer adhesion strength by fusion. The semi-crystalline thermoplastic resin includes, for example, at least one selected from the group consisting of polypropylene (PP), polyethylene (PE), polyacetal (POM), polyethylene terephthalate (PET), polybutylene terephthalate (PBT), polyphenylene sulfide (PPS), polyether ether ketone (PEEK), and the like.

The amorphous thermoplastic resin includes, for example, at least one selected from the group consisting of an ABS resin, polycarbonate (PC), a polymer alloy of an ABS resin and PC (hereinafter referred to as "ABS/PC polymer alloy"), an AS resin, polystyrene (PS), polymethyl methacrylate (PMMA), polyphenylene oxide (PPO), polysulfone (PSU), polyvinyl chloride (PVC), polyetherimide (PEI), polyethersulfone (PES), and the like.

In a case where the base material 31, the intermediate layer 33, and the overlay layer 35 do not contain the same type of thermoplastic resin, it is preferable that the base material 31, the intermediate layer 33, and the overlay layer 35 contain a non-crystalline thermoplastic resin from the viewpoint of improving the interlayer adhesion strength by fusion. In addition, it is also achieved that a specific interface can be eliminated by thermal fusion, which contributes to improvement of security.

The combination of the non-crystalline thermoplastic resins contained in respective ones of two adjacent layers of the card 30A is preferably as follows. In a case where one of two adjacent layers of the card 30A contains an ABS resin, the other layer preferably contains at least one selected from the group consisting of an ABS/PC polymer alloy, polycarbonate (PC), an AS resin, polystyrene (PS), polymethyl methacrylate (PMMA), and polyvinyl chloride (PVC).

In a case where one of two adjacent layers of the card 30A contains an ABS/PC polymer alloy, the other layer preferably contains at least one selected from the group consisting of an ABS resin, polycarbonate (PC), and polymethyl methacrylate (PMMA). In a case where one of two adjacent layers of the card 30A contains polycarbonate (PC), the other layer preferably contains at least one selected from the group consisting of an ABS resin, an ABS/PC polymer alloy, and polymethyl methacrylate (PMMA).

In a case where one of two adjacent layers of the card 30A contains an AS resin, the other layer preferably contains at least one selected from the group consisting of an ABS resin, polystyrene (PS), polymethyl methacrylate (PMMA), and polyphenylene oxide (PPO). In a case where one of two adjacent layers of the card 30A contains polystyrene (PS), the other layer preferably contains at least one selected from the group consisting of an AS resin and polyphenylene oxide (PPO).

In a case where one of two adjacent layers of the card 30A contains polymethyl methacrylate (PMMA), the other layer preferably contains at least one selected from the group consisting of an ABS resin, an ABS/PC polymer alloy, an AS resin, and polyphenylene oxide (PPO). In a case where one of two adjacent layers of the card 30A contains polyphenylene oxide (PPO), the other layer preferably contains at least one selected from the group consisting of polycarbonate (PC), an AS resin, polystyrene (PS), and polymethyl methacrylate (PMMA).

In a case where one of two adjacent layers of the card 30A contains polysulfone (PSU), the other layer preferably contains polycarbonate (PC). In a case where one of two adjacent layers of the card 30A contains polyvinyl chloride (PVC), the other layer preferably contains an ABS resin.

### [4.2 Method of manufacturing card]

Hereinafter, an example of a method of manufacturing the card 30A according to the fourth embodiment will be described.

First, after the intermediate layer 33 is placed on the first surface of the base material 31, the recording medium 36 is fitted into the accommodation part 33A of the intermediate layer 33. Note that the intermediate layer 33 in which the recording medium 36 is fitted in advance in the accommodation part 33A may be placed on the first surface of the base material 31. Next, the overlay layer 35 is placed on the intermediate layer 33. Next, the obtained laminate is sandwiched between metal plates and pressurized while being heated, thereby thermally fusing the base material 31 and the intermediate layer 33 together, and the intermediate layer 33 and the overlay layer 35 together. The temperature applied to the laminate at the time of thermal fusion is preferably 110°C or more and 200°C or less from the viewpoint of reducing damage to the recording medium 36 and the viewpoint of exhibiting sufficient fusion strength. Thus, the target card 30A is obtained.

### [4.3 Operation and effect]

As described above, in the card 30A according to the fourth embodiment, the base material 31 and the intermediate layer 33, and the intermediate layer 33 and the overlay layer 35 are fused. With this configuration, the base material 31 and the intermediate layer 33, and the intermediate layer 33 and the overlay layer 35 can be firmly bonded. Therefore, tampering can be prevented more reliability.

### <5 Modifications>

### (Modification 1)

As illustrated in Fig. 7, a recording medium 10B according to Modification 1 is different from the recording medium 10A according to the second embodiment in including a bonding layer 12A instead of the adhesive layer 12. The bonding layer 12A includes at least a pressure-sensitive adhesive layer. The bonding layer 12A may be a laminate including a film as a base material and pressure-sensitive adhesive layers provided on both surfaces of the film, or may be a single layer of a pressure-sensitive adhesive layer. Specifically, the bonding layer 12A may be, for example, a double-sided sticky film such as an optical clear adhesive (OCA). The pressure-sensitive adhesive layer includes a pressure-sensitive adhesive. The pressure-sensitive adhesive contains, for example, at least one selected from the group consisting of an acrylic pressure-sensitive adhesive, a urethane pressure-sensitive adhesive, a silicone pressure-sensitive adhesive, and the like. The pressure-sensitive adhesive layer may contain, for example, various additives such as an ultraviolet absorber.

With the laminate 20A and the cover layer 13 bonded by the bonding layer 12A, the peel strength between the laminate 20A and the cover layer 13 can be made lower than the peel strength between the base material 11 and the laminate 20A and the peel strength between the color development layers 22 included in the laminate 20A. Therefore, in a case where it is attempted to take out the recording medium 10B with a knife or the like for the purpose of tampering, the laminate 20A and the cover layer 13 are selectively peeled off from each other, and a trace of tampering remains. Therefore, it can be determined by visual observation or the like that an attempt to take out the recording medium 10B for the purpose of tampering has been made.

The average peel strength between the laminate 20A and the cover layer 13 is preferably 4 N/cm or less. The average peel strength between the laminate 20A and the cover layer 13 being 4 N/cm or less can facilitate selective peeling of the laminate 20A and the cover layer 13 from each other in a case where an attempt is made to take out the recording medium 10B with a knife or the like for the purpose of tampering.

The average peel strength between the laminate 20A and the cover layer 13 is determined in a manner similar to that for the average peel strength between the base material 11 and the laminate 20 in the first embodiment.

In the above description, an example has been described in which the recording medium 10B according to Modification 1 includes the laminate 20A, but the recording medium 10B according to Modification 1 may include the laminate 20 in the first embodiment instead of the laminate 20A.

### (Modification 2)

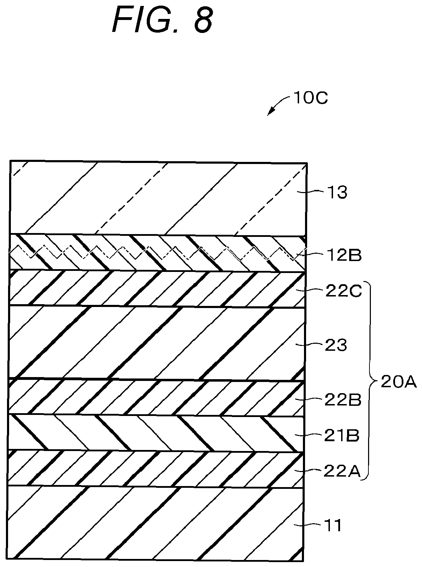

As illustrated in Fig. 8, a recording medium 10C according to Modification 2 is different from the recording medium 10A according to the second embodiment in including a brittle layer 12B instead of the adhesive layer 12. In a case where an attempt is made to take out the recording medium 10C for the purpose of tampering, the brittle layer 12B is fractured. This makes it difficult to reattach the cover layer 13. In addition, the fracture of the brittle layer 12B is preferably cohesive failure. In a case where the fracture of the brittle layer 12B is cohesive failure, light is scattered on the peeled surface and therefore the peeled surface is whitened. Therefore, it can be easily determined by visual observation or the like that tampering of the recording medium 10A has been attempted.

The brittle layer 12B includes, for example, a film as a base material and pressure-sensitive adhesive layers provided on both surfaces of the film. The film includes, for example, at least one selected from the group consisting of a polyvinyl chloride film, a polypropylene film, and the like.

In the above description, an example has been described in which the recording medium 10B according to Modification 2 includes the laminate 20A, but the recording medium 10B according to Modification 2 may include the laminate 20 in the first embodiment instead of the laminate 20A.

### (Modification 3)

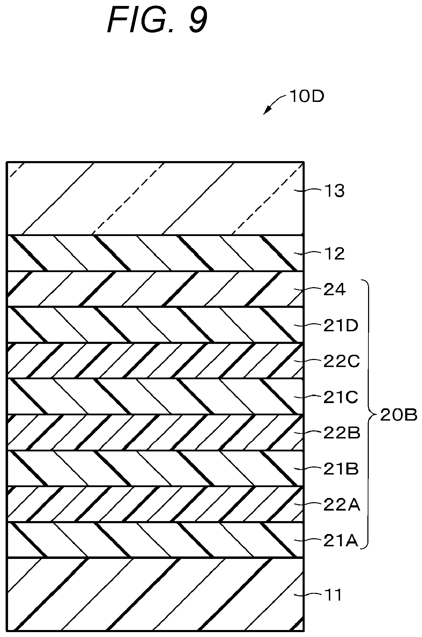

As illustrated in Fig. 9, a recording medium 10D according to Modification 3 is different from the recording medium 10 according to the first embodiment in including a laminate 20B instead of the laminate 20. The laminate 20B is different from the laminate 20 in the first embodiment in further including an adhesive layer 21D and a functional layer 24. The adhesive layer 21D and the functional layer 24 are laminated in this order on the color development layer 22C.

The functional layer 24 includes, for example, at least one selected from the group consisting of a UV cut layer and a hologram layer. The adhesive layer 21D may be similar to the adhesive layer 21A.

The average peel strength between the functional layer 24 and the color development layer 22C is preferably 5 N/cm or more, more preferably 8 N/cm or more, still more preferably 10 N/cm or more, and particularly preferably 15 N/cm or more. With the average peel strength between the functional layer 24 and the color development layer 22C of 5 N/cm or more as described above, peeling of the functional layer 24 and the color development layer 22C from each other can be prevented. Therefore, tampering of the recording medium 10D can be prevented.

The average peel strength between the functional layer 24 and the cover layer 13 is preferably 5 N/cm or more, more preferably 8 N/cm or more, still more preferably 10 N/cm or more, and particularly preferably 15 N/cm or more. With the average peel strength between the functional layer 24 and the cover layer 13 of 5 N/cm or more as described above, peeling of the functional layer 24 and the cover layer 13 from each other can be prevented. Therefore, tampering of the recording medium 10D can be prevented.

In the above description, an example has been described in which the laminate 20A further includes the adhesive layer 21D and the functional layer 24, but the laminate 20B may further include the adhesive layer 21D and the functional layer 24.

In the above description, an example has been described in which the functional layer 24 is provided on the color development layer 22C, but the lamination position of the functional layer 24 in the recording medium 10D is not limited to this example, and may be, for example, between the base material 11 and the color development layer 22A, between the color development layer 22A and the color development layer 22B, or between the color development layer 22B and the color development layer 22C.

In the above description, an example has been described in which the recording medium 10D includes one functional layer 24, but the recording medium 10D may include two or more functional layers 24. In this case, the two or more functional layers 24 may be provided adjacent to each other, or may be provided with one or two or more color development layers 22 interposed therebetween.

### (Modification 4)

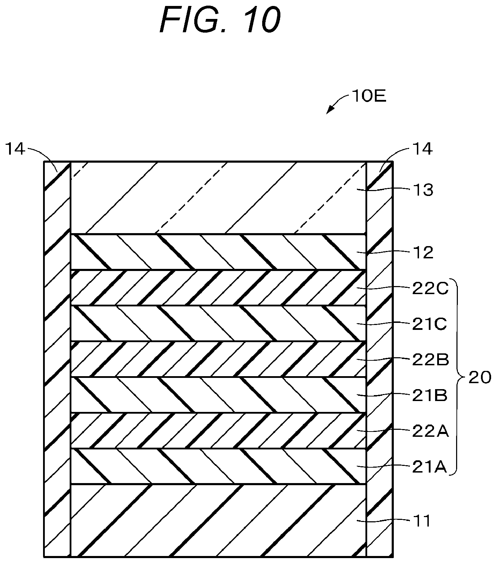

As illustrated in Fig. 10, a recording medium 10E according to Modification 4 is different from the recording medium 10 according to the first embodiment in further including a side cover 14. The side cover 14 covers the end portions of the base material 11, the laminate 20, the adhesive layer 12, and the cover layer 13. Here, the end portion means a portion between peripheral edges of both main surfaces of each of the base material 11, the laminate 20, the adhesive layer 12, and the cover layer 13. The side cover 14 contains, for example, an ultraviolet curable resin. The side cover 14 may contain, for example, various additives such as an ultraviolet absorber.

Since the recording medium 10E includes the side cover 14, moisture or the like can be prevented from entering the recording medium 10E from the end portion of the recording medium 10E.

### (Modification 5)

In the first and second embodiments, an example has been described in which the recording media 10 and 10A include the three color development layers 22A, 22B, and 22C, but the recording media 10 and 10A may include a plurality of color development layers other than three color development layers (that is, two color development layers or four or more color development layers). Also in this case, an adhesive layer or a base material may be provided between the color development layers. The respective plurality of color development layers may be capable of exhibiting hues different from each other in the color-developed state. That is, the coloring compounds contained in respective ones of the plurality of color development layers may be capable of exhibiting hues different from each other in the color-developed state. The photothermal conversion agents contained in respective ones of the plurality of color development layers may have absorption wavelength peaks different from each other.

### (Modification 6)

In the first and second embodiments, an example has been described in which the recording media 10 and 10A include the adhesive layer 12 and the cover layer 13, but the recording media may include no adhesive layer 12 and no cover layer 13.

### (Modification 7)

In the first and second embodiments, an example has been described in which objects of adhesion (for example, the base material 11, the color development layer 22A, the color development layer 22B, and the color development layer 22C) are caused to adhere to each other by application and thermal curing of a thermosetting resin on the objects of adhesion, but the method of manufacturing the recording media 10 and 10A is not limited thereto. For example, instead of application of a thermosetting resin to the objects of adhesion, a thermosetting adhesive sheet may be sandwiched between the objects of adhesion and heated to cause the objects of adhesion to adhere to each other.

### (Modification 8)

In the third embodiment, an example has been described in which the adhesive layer 32, the intermediate layer 33, the adhesive layer 34, and the overlay layer 35 are sequentially laminated on the first surface of the base material 31, but the adhesive layer 32, the intermediate layer 33, the adhesive layer 34, and the overlay layer 35 may be sequentially laminated also on the second surface of the base material 31. Alternatively, the adhesive layer 32, the intermediate layer 33, the adhesive layer 34, and the overlay layer 35 may be sequentially laminated on the second surface instead of the first surface.

In the fourth embodiment, an example has been described in which the intermediate layer 33 and the overlay layer 35 are sequentially laminated on the first surface of the base material 31, but the intermediate layer 33 and the overlay layer 35 may be sequentially laminated also on the second surface of the base material 31. Alternatively, the intermediate layer 33 and the overlay layer 35 may be sequentially laminated on the second surface instead of the first surface.

### (Modification 9)

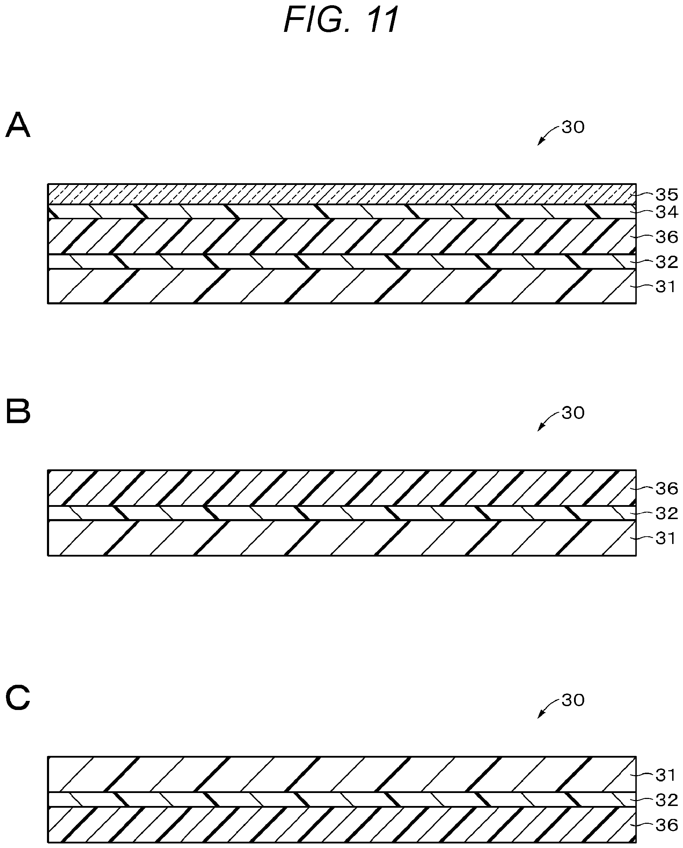

In the third embodiment, an example has been described in which the card 30 includes the recording medium 36 in a partial area of the first surface of the base material 31, but the card 30 may include the recording medium 36 in substantially the entire area of the first surface of the base material 31, as illustrated in Fig. 11A. Specifically, the card 30 may include the recording medium 36 having substantially the same size as the base material 31 between the adhesive layer 32 and the adhesive layer 34.

Similarly, the card 30A may include the recording medium 36 in substantially the entire region of the first surface of the base material 31. Specifically, the card 30A may include the recording medium 36 having substantially the same size as the base material 31 between the base material 31 and the overlay layer 35.

The first surface of the recording medium 36 may be treated to be releasable. In a case where the recording medium 36 having the first surface treated to be releasable is attempted to be taken out with a knife or the like for the purpose of tampering, the recording medium 36 and the overlay layer 35 are selectively peeled off from each other and thus it is difficult to take out the recording medium 36. The second surface of the recording medium 36 may be treated to be releasable.

### (Modification 10)

In the Modification 9, an example has been described in which the card 30 includes the adhesive layer 34 and the overlay layer 35, but the card 30 may include no adhesive layer 34 and no overlay layer 35, as illustrated in Fig. 11B. Similarly, the card 30A may include no overlay layer 35.

### (Modification 11)

In the Modification 10, an example has been described in which the card 30 includes the adhesive layer 32 and the recording medium 36 on the front surface (first surface) of the base material 31, but the card 30 may include the adhesive layer 32 and the recording medium 36 on the back surface (second surface) of the base material 31, as illustrated in Fig. 11C. In this case, the recording medium 36 may be provided on the back surface (second surface) of the base material 31 such that the base material 11 of the recording medium 36 faces the base material 31. Similarly, the card 30A may include the recording medium 36 on the back surface (second surface) of the base material 31.

### (Modification 12)

In the first and second embodiments, an example has been described in which the accommodation part 33A is a through hole penetrating in the thickness direction of the intermediate layer 33, but the accommodation part 33A may be a bottomed recess recessed in the thickness direction of the intermediate layer 33. In this case, the recess may be provided on the first surface facing the overlay layer 35 or on the second surface facing the base material 31 among both surfaces of the intermediate layer 33.

### (Modification 13)

In the third and fourth embodiments, the examples of the cards 30 and 30A have been described which are provided with the recording medium 10 according to the first embodiment or the recording medium 10A according to the second embodiment, but the recording medium 10 or the recording medium 10A may be provided in a booklet.

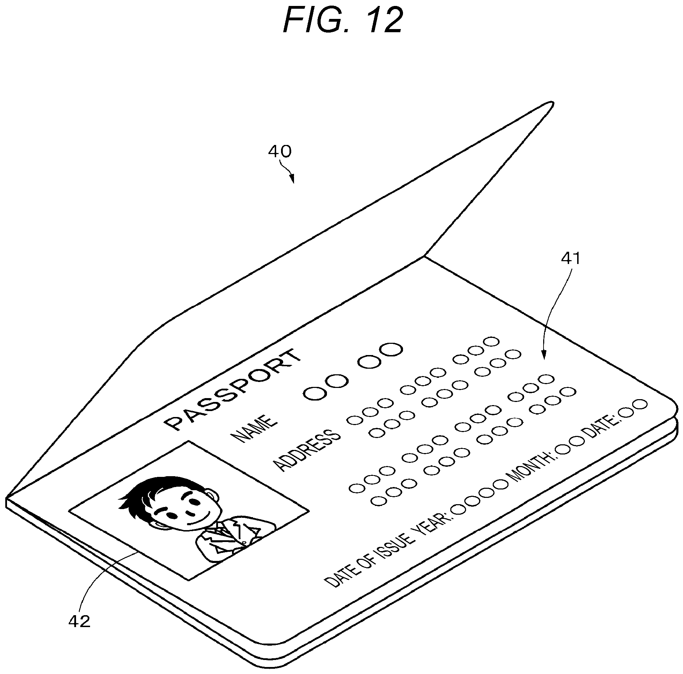

Fig. 12 is a perspective view illustrating an example of a configuration of a booklet 40 according to Modification 13. The booklet 40 is a passport. The passport is an example of booklet-type identification. The booklet 40 includes a plurality of sheets 41. The plurality of sheets 41 is saddle-stitched. A recording medium 42 is provided on at least one surface or both surfaces of the sheet 41. A face photograph or the like is drawn on the recording medium 42. The recording medium 42 is the recording medium 10 according to the first embodiment or the recording medium 10A according to the second embodiment. The sheet 41 may have a layer configuration similar to that of the card 30 according to the third embodiment or the card 30A according to the fourth embodiment. In this case, the base material may be paper or the like.

### (Modification 14)

The recording media 10, 10A, 10B, 10C, 10D, and 10E described above may be provided in medical supplies, automobile parts, automobiles, toys, foods, cosmetics, clothing items, documents, exterior members, electronic devices (for example, housings of electronic devices), or the like. Specific examples of the exterior member include, for example, the interior or exterior of a wall or the like of a building, the exterior of furniture such as a desk, and the like. Specific examples of the electronic device include personal computers (hereinafter referred to as "PC"), mobile devices, mobile phones (for example, smartphones), tablet computers, display devices, imaging devices, audio devices, game devices, industrial devices, medical devices, robots, wearable terminals, and the like. Specific examples of the wearable terminal include clothing items such as watches (wristwatches), bags, clothes, hats, glasses, and shoes. Two or more of the recording media 10, 10A, 10B, 10C, 10D, and 10E described above may be combined and provided in the above-described various products.

### (Other modifications)

The embodiments and modifications thereof of the present disclosure have been specifically described above, but the present disclosure is not limited to the above-described embodiments and modifications thereof, and various modifications based on the technical idea of the present disclosure may be made.

For example, configurations, methods, processes, shapes, materials, numerical values, and the like in the above-described embodiments and modifications are merely examples, and different configurations, methods, processes, shapes, materials, numerical values, and the like may be employed as necessary.

The configurations, methods, processes, shapes, materials, numerical values, and the like of the above-described embodiments and modifications can be combined with each other without departing from the gist of the present disclosure.

In numerical value ranges described in stages in the above-described embodiments and modifications, an upper limit value or a lower limit value of a numerical value range of a certain stage may be replaced with an upper limit value or a lower limit value of a numerical value range of another stage.

The materials exemplified in the above-described embodiments and modifications may be used alone or in combination of two or more unless otherwise specified.

Furthermore, the present disclosure can also employ the following configurations.
(1) A recording medium including:
   a first base material; and
   a laminate provided on the first base material; in which
   the laminate includes a plurality of color development layers, and
   an average peel strength between the first base material and the laminate and an average peel strength between the color development layers included in the laminate are 5 N/cm or more.
(2) The recording medium according to (1), in which the plurality of color development layers contains a coloring compound having an electron-donating property and a developer having an electron-accepting property.
(3) The recording medium according (1) or (2), in which the laminate further includes a plurality of adhesive layers,
   the plurality of color development layers includes a first color development layer, a second color development layer, and a third color development layer,
   the plurality of adhesive layers includes a first adhesive layer, a second adhesive layer, and a third adhesive layer, and
   the first adhesive layer, the first color development layer, the second adhesive layer, the second color development layer, the third adhesive layer, and the third color development layer are laminated in this order on the first base material.
(4) The recording medium according (3), in which the first adhesive layer, the second adhesive layer, and the third adhesive layer contain a thermosetting resin.
(5) The recording medium according to (1) or (2), in which
   the laminate further includes a fourth adhesive layer and a second base material,
   the plurality of color development layers includes a first color development layer, a second color development layer, and a third color development layer,
   the first color development layer, the fourth adhesive layer, the second color development layer, the second base material, and the third color development layer are laminated in this order on the first base material, and
   an average peel strength between the second color development layer and the second base material and an average peel strength between the third color development layer and the second base material are 5 N/cm or more.
(6) The recording medium according to (5), in which the fourth adhesive layer contains a thermosetting resin.
(7) The recording medium according to any one of (1) to (6), further including:
   a fifth adhesive layer provided on the laminate; and
   a cover layer provided on the fifth adhesive layer, in which
   an average peel strength between the laminate and the cover layer is 5 N/cm or more.
(8) The recording medium according to any one of (1) to (6), further including:
   a bonding layer provided on the laminate; and
   a cover layer provided on the bonding layer, in which
   an average peel strength between the laminate and the cover layer is 4 N/cm or less.
(9) The recording medium according to any one of (1) to (6), further including:
   a brittle layer provided on the laminate; and
   a cover layer provided on the brittle layer.
(10) The recording medium according to any one of (1) to (9), in which
   the laminate further includes a functional layer, and
   an average peel strength between the functional layer and the color development layer is 5 N/cm or more.
(11) The recording medium according to any one of (1) to (10), further including a cover that covers end portions of the first base material and the laminate.
(12) The recording medium according to any one of (1) to (11), in which an average peel strength between the first base material and the laminate and an average peel strength between the color development layers included in the laminate are 8 N/cm or more.
(13) The recording medium according to any one of (1) to (11), in which an average peel strength between the first base material and the laminate and an average peel strength between the color development layers included in the laminate are 10 N/cm or more.
(14) A recording medium including:
   a first base material; and
   a laminate provided on the first base material; in which
   the laminate includes a plurality of color development layers, and
   an average value of minimum peel strengths among peel strengths between the respective layers constituting the recording medium is 5 N/cm or more.
(15) A card including the recording medium according to any one of (1) to (14).
(16) The card according to (15), further including a card base material having a first surface and a second surface, in which
   the recording medium is provided on the first surface and/or the second surface.
(17) The card according to (16), further including an overlay layer, in which
   the recording medium is provided between the card base material and the overlay layer.
(18) The card according to (16), further including an intermediate layer and an overlay layer, in which
   the intermediate layer is provided between the card base material and the overlay layer, and includes an accommodation part that accommodates the recording medium.
(19) A booklet including the recording medium according to any one of (1) to (14).

### Examples

Hereinafter, the present disclosure will be specifically described with reference to examples, but the present disclosure is not limited to these examples.

### [Example 1]

### (Step of forming first laminated film)

First, a bis(hydroxybenzoic acid) type compound (first developer) and polycarbonate (first matrix resin) were dissolved and dispersed in methyl ethyl ketone (MEK). Next, a leuco dye (first coloring compound) that exhibits a magenta color in a color-developed state and a photothermal conversion material (first photothermal conversion material) having an absorption wavelength peak in a near-infrared region and having a phthalocyanine skeleton were added to this solution to prepare a first color development layer-forming coating material. Subsequently, the first color development layer-forming coating material was applied onto a first film and dried. Thus, a first laminated film including the first color development layer and the first film was obtained.

### (Step of forming second laminated film)

As the second coloring compound, a leuco dye that exhibits a cyan color in a color-developed state was used. In addition, as the second photothermal conversion agent, a photothermal conversion material having an absorption wavelength peak different from that of the first photothermal conversion agent in a near-infrared region and having a phthalocyanine skeleton was used. Except for the above, a second laminated film including a second color development layer and a second film was obtained in a manner similar to that in the step of forming the first laminated film.

### (Step of forming third laminated film)

As the third coloring compound, a leuco dye that exhibits a yellow color in a color-developed state was used. In addition, as the third photothermal conversion agent, a photothermal conversion material having an absorption wavelength peak different from those of the first photothermal conversion agent and the second photothermal conversion agent in a near-infrared region and having a phthalocyanine skeleton was used. Except for the above, a third laminated film including a third color development layer and a third film was obtained in a manner similar to that in the step of forming the first laminated film.

### (Lamination step)

First, an epoxy adhesive as a thermosetting resin was applied onto a PET film as a base material in a thickness of 5 um or more to form a coating. The thermosetting resin may be laminated by pressurization under application of heat by, for example, a step of sandwiching a sheet-shaped thermosetting resin between metal plates or a step of conveying the sheet-shaped thermosetting resin sandwiched between a metal roll (for example, a SUS roll) and a rubber roll (for example, a heat-resistant silicone roll). Next, the first laminated film was placed on the coating such that the first color development layer was on the coating side, and then the coating was thermally cured by pressurization under application of heat while the entire laminated body was sandwiched between metal plates. Thus, the base material and the first color development layer were caused to adhere to each other by the first adhesive layer (thermosetting resin layer).

Next, an epoxy adhesive as a thermosetting resin was applied onto the first color development layer in a thickness of 5 um or more to form a coating. The thermosetting resin may be laminated by pressurization under application of heat by, for example, a step of sandwiching a sheet-shaped thermosetting resin between metal plates or a step of conveying the sheet-shaped thermosetting resin sandwiched between a metal roll (for example, a SUS roll) and a rubber roll (for example, a heat-resistant silicone roll). Next, the second laminated film was placed on the coating such that the second color development layer was on the coating side, and then the coating was thermally cured by pressurization under application of heat while the entire laminated body was sandwiched between metal plates. Thus, the first color development layer and the second color development layer were caused to adhere to each other by the second adhesive layer (thermosetting resin layer).

Next, an epoxy adhesive as a thermosetting resin was applied onto the second color development layer in a thickness of 5 um or more to form a coating. The thermosetting resin may be laminated by pressurization under application of heat by, for example, a step of sandwiching a sheet-shaped thermosetting resin between metal plates or a step of conveying the sheet-shaped thermosetting resin sandwiched between a metal roll (for example, a SUS roll) and a rubber roll (for example, a heat-resistant silicone roll). Next, the third laminated film was placed on the coating such that the third color development layer was on the coating side, and then the coating was thermally cured by pressurization under application of heat while the entire laminated body was sandwiched between metal plates. Thus, the second color development layer and the third color development layer were caused to adhere to each other by the third adhesive layer (thermosetting resin layer).

Next, an epoxy adhesive as a thermosetting resin was applied onto the third color development layer in a thickness of 5 um or more to form a coating. The thermosetting resin may be laminated by pressurization under application of heat by, for example, a step of sandwiching a sheet-shaped thermosetting resin between metal plates or a step of conveying the sheet-shaped thermosetting resin sandwiched between a metal roll (for example, a SUS roll) and a rubber roll (for example, a heat-resistant silicone roll). Next, a PET film as a cover layer was placed on the coating, and then the coating was thermally cured by pressurization under application of heat while the entire laminated body was sandwiched between metal plates. Thus, the third color development layer and the cover layer were caused to adhere to each other by the fifth adhesive layer (thermosetting resin layer). In this way, a recording medium was obtained.

### [Example 2]

First, a first color development layer was formed by coating on one surface of a PET film (thermoplastic resin sheet) as a base material. Thus, a first laminate was obtained. Next, a second color development layer and a third color development layer were formed by coating on both surfaces of a PET film (thermoplastic resin sheet) as a base material. Thus, a second laminate was obtained. The thermoplastic resin sheet is not limited to the PET film, and any thermoplastic resin sheet having resistance to a solvent to be applied may be appropriately selected. Next, a thermosetting resin was applied onto the first color development layer of the first laminate in a thickness of 5 um or more to form a coating. Next, the second laminate was placed on the coating such that the second color development layer was on the coating side, and then the coating was thermally cured by pressurization under application of heat while the entire laminated body was sandwiched between metal plates. Thus, the first color development layer and the second color development layer were caused to adhere to each other by the fourth adhesive layer (thermosetting resin layer). Except for the above, a recording medium was obtained in a manner similar to that in Example 1.

### [Example 3]

In the lamination step, an acrylic thermosetting adhesive sheet was formed on the third color development layer. Next, a PET film as a cover layer was placed on the adhesive layer, and then the entire laminated body was pressurized under application of heat while being sandwiched between metal plates. Thus, the third color development layer and the cover layer were bonded by the fifth adhesive layer. Except for the above, a recording medium was obtained in a manner similar to that in Example 1.

### [Comparative Example 1]

As a thermosetting resin for forming the first, second, third and fifth adhesive layers (thermosetting resin layers), an epoxy adhesive was applied in a thickness of about 2 um to form a coating. Except for the above, a recording medium was obtained in a manner similar to that in Example 1.

### [Evaluation of peel strength]

Using the recording media of Examples 1 to 3 and Comparative Example 1 obtained as described above, the average peel strength between the base material and the first color development layer (between the base material and the laminate), the average peel strength between the first color development layer and the second color development layer, the average peel strength between the second color development layer and the third color development layer, and the average peel strength between the third color development layer and the cover layer (between the laminate and the cover layer) were measured. The results thereof are shown in Table 1. As a method for measuring the average peel strength, the method for measuring the average peel strength described in the first embodiment was used.

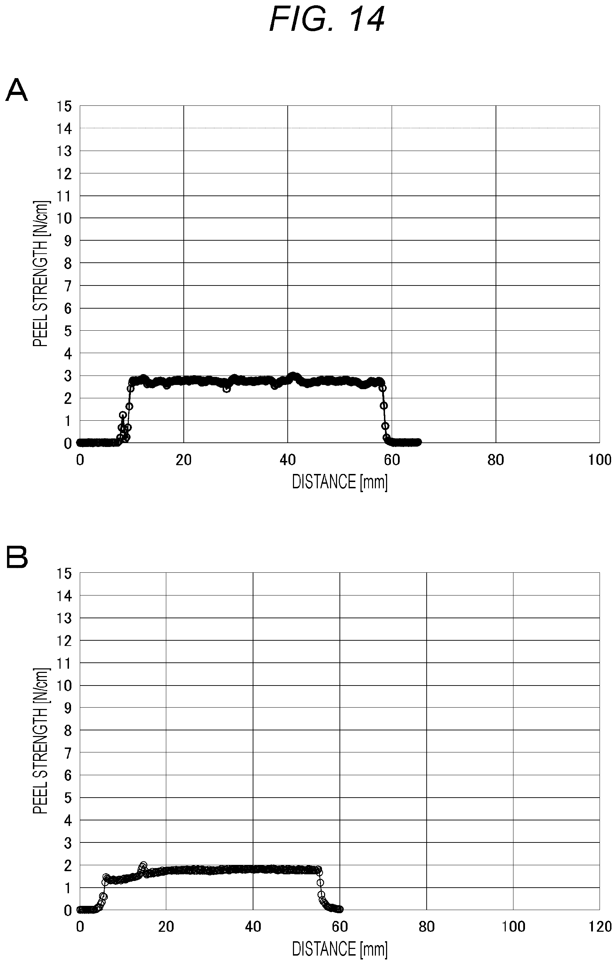

Fig. 13A shows a graph obtained by the 90 degree peel test between the base material and the first color development layer in Example 1. Fig. 13B shows a graph obtained by the 90 degree peel test between the base material and the first color development layer in Example 2. Fig. 14A shows a graph obtained by the 90 degree peel test between the third color development layer and the cover layer in Example 3. Fig. 14B shows a graph obtained by the 90 degree peel test between the base material and the first color development layer in Comparative Example 1.

**[Table 1]**

| | Average peel strength between base material and first color development layer | Average peel strength between first color development layer and second color development layer | Average peel strength between second color development layer and third color development layer | Average peel strength between third color development layer and cover layer |
|---|---|---|---|---|
| Example 1 | 6.2 N/cm | 6.2 N/cm | 6.3 N/cm | 6.0 N/cm |
| Example 2 | 8.4 N/cm | 8.1 N/cm | 8.3 N/cm | 8.3 N/cm |
| Example 3 | 6.2 N/cm | 6.2 N/cm | 6.3 N/cm | 8.5 N/cm |
| Comparative Example 1 | 2.7 N/cm | 2.8 N/cm | 2.5 N/cm | 2.8 N/cm |

### REFERENCE SIGNS LIST

- 10, 10A, 10B, 10C, 10D, 10E, 36, 42: Recording medium
- 11, 23, 31: Base material
- 12, 21A, 21B, 21C, 21D, 32, 34: Adhesive layer
- 12A: Bonding layer
- 12B: Brittle layer
- 13: Cover layer
- 14: Side cover
- 30, 30A: Card
- 33: Intermediate layer
- 33A: Accommodation part
- 35: Overlay layer
- 40: Booklet
- 41: Sheet

## Claims

1. A recording medium comprising:
a first base material; and
a laminate provided on the first base material; wherein
the laminate includes a plurality of color development layers, and
an average peel strength between the first base material and the laminate and an average peel strength between the color development layers included in the laminate are 5 N/cm or more.

2. The recording medium according to claim 1, wherein the plurality of color development layers contains a coloring compound having an electron-donating property and a developer having an electron-accepting property.

3. The recording medium according to claim 1, wherein
the laminate further includes a plurality of adhesive layers,
the plurality of color development layers includes a first color development layer, a second color development layer, and a third color development layer,
the plurality of adhesive layers includes a first adhesive layer, a second adhesive layer, and a third adhesive layer, and
the first adhesive layer, the first color development layer, the second adhesive layer, the second color development layer, the third adhesive layer, and the third color development layer are laminated in this order on the first base material.

4. The recording medium according to claim 3, wherein the first adhesive layer, the second adhesive layer, and the third adhesive layer contain a thermosetting resin.

5. The recording medium according to claim 1, wherein
the laminate further includes a fourth adhesive layer and a second base material,
the plurality of color development layers includes a first color development layer, a second color development layer, and a third color development layer,
the first color development layer, the fourth adhesive layer, the second color development layer, the second base material, and the third color development layer are laminated in this order on the first base material, and
an average peel strength between the second color development layer and the second base material and an average peel strength between the third color development layer and the second base material are 5 N/cm or more.

6. The recording medium according to claim 5, wherein the fourth adhesive layer contains a thermosetting resin.

7. The recording medium according to claim 1, further comprising:
a fifth adhesive layer provided on the laminate; and
a cover layer provided on the fifth adhesive layer, wherein
an average peel strength between the laminate and the cover layer is 5 N/cm or more.

8. The recording medium according to claim 1, further comprising:
a bonding layer provided on the laminate; and
a cover layer provided on the bonding layer, wherein
an average peel strength between the laminate and the cover layer is 4 N/cm or less.

9. The recording medium according to claim 1, further comprising:
a brittle layer provided on the laminate; and
a cover layer provided on the brittle layer.

10. The recording medium according to claim 1, wherein
the laminate further includes a functional layer, and
an average peel strength between the functional layer and the color development layer is 5 N/cm or more.

11. The recording medium according to claim 1, further comprising a cover that covers end portions of the first base material and the laminate.

12. The recording medium according to claim 1, wherein an average peel strength between the first base material and the laminate and an average peel strength between the color development layers included in the laminate are 8 N/cm or more.

13. The recording medium according to claim 1, wherein an average peel strength between the first base material and the laminate and an average peel strength between the color development layers included in the laminate are 10 N/cm or more.

14. A recording medium comprising:
a first base material; and
a laminate provided on the first base material; wherein
the laminate includes a plurality of color development layers, and
an average value of minimum peel strengths among peel strengths between the respective layers constituting the recording medium is 5 N/cm or more.

15. A card comprising the recording medium according to claim 1.

16. The card according to claim 15, further comprising a card base material having a first surface and a second surface, wherein
the recording medium is provided on the first surface and/or the second surface.

17. The card according to claim 16, further comprising an overlay layer, wherein
the recording medium is provided between the card base material and the overlay layer.

18. The card according to claim 16, further comprising an intermediate layer and an overlay layer, wherein
the intermediate layer is provided between the card base material and the overlay layer, and includes an accommodation part that accommodates the recording medium.

19. A booklet comprising the recording medium according to claim 1.
